(19) Europäisches Patentamt
European Patent Office
Office européen des brevets

(11) EP 1 601 723 B1

(12) EUROPEAN PATENT SPECIFICATION

(45) Date of publication and mention of the grant of the patent:
**31.10.2018 Bulletin 2018/44**

(21) Application number: **04718168.0**

(22) Date of filing: **05.03.2004**

(51) Int Cl.:
***C08L 83/06*** *(2006.01)* ***G02C 7/04*** *(2006.01)*

(86) International application number:
**PCT/US2004/007130**

(87) International publication number:
**WO 2004/081105 (23.09.2004 Gazette 2004/39)**

# (54) DILUENTS FOR FORMING CLEAR, WETTABLE SILICONE HYDROGEL ARTICLES

VERDÜNNUNGSMITTEL ZUR HERSTLELUNG VON KLAREN, BENETZBAREN SILIKONHYDROGELGEGENSTÄNDEN

DILUANTS PERMETTANT DE PRODUIRE DES ARTICLES EN HYDROGEL DE SILICONE MOUILLABLES TRANSPARENTS

(84) Designated Contracting States:
**DE FR GB IE IT**

(30) Priority: **07.03.2003 US 452898 P**

(43) Date of publication of application:
**07.12.2005 Bulletin 2005/49**

(73) Proprietor: **Johnson & Johnson Vision Care, Inc.**
**Jacksonville, FL 32256 (US)**

(72) Inventors:
- **VANDERLAAN, Douglas, G.**
  **Jacksonville, FL 32206 (US)**
- **PETISCE, James, R.**
  **San Diego, CA 02130 (US)**
- **AZAAM, Alli**
  **Jacksonville, FL 32256 (US)**
- **MCCABE, Kevin, P.**
  **Jacksonville, FL 32225 (US)**
- **RATHORE, Osman**
  **Jacksonville, FL 32256 (US)**

(74) Representative: **Kirsch, Susan Edith et al**
**Carpmaels & Ransford LLP**
**One Southampton Row**
**London WC1B 5HA (GB)**

(56) References cited:
**EP-A1- 0 908 744**
**WO-A-01/70837**
**US-A- 3 959 102**
**US-A1- 2002 107 324**
**US-A1- 2004 186 248**
**US-B1- 6 367 929**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 601 723 B1

## Description

### Field of the Invention

The present invention relates to compatible compositions for forming molded articles and particularly medical devices such as contact lenses. More particularly, the present invention relates to a novel class of diluents, which allows the formation of compatible solutions comprising hydrophilic component(s), silicone containing component(s) and internal wetting agent(s).

### Background of the Invention

Silicone hydrogels have been prepared by polymerizing mixtures containing at least one silicone-containing monomer and at least one hydrophilic monomer. Either the silicone-containing monomer or the hydrophilic monomer may function as a crosslinking agent or a separate crosslinking agent may be employed. Various alcohols, including n-hexanol, ethanol, and n-nonanol have been used as diluents to compatibilize the silicone monomers and the hydrophilic monomers. However, the articles made from these components and diluents either did not form clear articles or were not sufficiently wettable to be used without a coating.

Primary and secondary alcohols having more that four carbon atoms have also been disclosed to be useful as diluents for silicone containing hydrogels. However, many of these diluents do not form clear, wettable articles when internal wetting agents are included in the reaction mixture. While these diluents are useful, many require an additional compatibilizing component to produce clear, wettable molded articles.

WO 01/70837 A (and US-B-6 367 929) describe a wettable silicone hydrogel comprising the reaction product of: a) a silicone containing macromer; b) a silicone containing reaction mixture; and c) a high molecular weight polymer that is hydrophilic relative to the silicone from which the silicone reaction mixture is comprised. The hydrophilic polymer is entrapped in the silicone hydrogel.

EP-A-0 908 744 describes a reaction mixture for use in forming a contact lens, comprising at least one silicone containing monomer, at least one hydrophilic monomer, and a diluent.

US-A-3 959 102 describes a flexible contact lens having hydrophilic and lipophobic properties formed by crosslinking a selected water soluble polymer that has been grafted onto a pre-formed substrate, for example by crosslinking polyvinyl pyrrolidone that has been previously grafted onto a silicone substrate. The grafting and the crosslinking are accomplished in separate stages.

US 2002/107324 describes a soft contact lens containing a silicone-hydrogel made by curing a reaction mixture containing a silicone-containing monomer.

Thus, there still remains a need in the art for silicone hydrogels which are polymerized in an economic and efficient way.

### Summary of the Invention

The present invention relates to compositions comprising at least one silicone containing component, at least one hydrophilic component, a high molecular weight hydrophilic polymer, wherein the high molecular weight hydrophilic polymer has a K-value of greater than 46, and at least one diluent having an alpha value of between 0.05 and 1 and a Hansen solubility parameter, $\delta p$ of less than 10, wherein said composition forms a clear blend at a selected reaction temperature wherein the reaction temperature is up to 75 °C.

The present invention further relates to a composition comprising at least one silicone containing component, at least one hydroxyl containing component, an high molecular weight hydrophilic polymer, wherein the high molecular weight hydrophilic polymer has a K-value of greater than 46, and a diluent having an alpha value of between 0.05 and 1 and a Hansen solubility parameter, $\delta p$ of less than 10, wherein said composition forms a clear blend at a selected reaction temperature wherein the reaction temperature is up to 75 °C. The present disclosure further relates to a composition comprising at least one silicone containing component, at least one hydrophilic component, a high molecular weight hydrophilic polymer and a diluent which is capable at about ambient temperature and at a concentration of 2 gm, of forming a compatible mixture comprising about 1.6 gm of said hydrophilic component, about 0.3 gm of said high molecular weight hydrophilic polymer at least about 1 gm silicone containing monomer.

The compositions do not include a silicone containing compatibilizing component, which is a reaction component that contains at least one silicone and at least one hydroxyl group. The present invention further relates to an ophthalmic device according to claim 34.

Still further the present invention relates to methods for manufacturing devices, specifically clear and wettable ophthalmic devices according to claim 36, and more specifically contact lenses and the articles so made.

Description of the Figures

Figure 1 is a graph depicting the Hansen solubility parameter, δp v. the alpha value for various diluents.

Description of the Invention

The present invention relates to compositions comprising at least one hydrophilic component, at least one silicone component, at least one high molecular weight hydrophilic polymer and at least one diluent, which is capable of compatibilizing the components without a compatibilizing agent. The compositions do not include a silicone containing compatibilizing component.

As used herein, a "biomedical device" is any article that is designed to be used while either in or on mammalian tissues or fluid, and preferably in or on human tissue or fluids. Examples of these devices include but are not limited to catheters, implants, stents, and ophthalmic devices such as intraocular lenses and contact lenses. The referred biomedical devices are ophthalmic devices, particularly contact lenses, most particularly contact lenses made from silicone hydrogels.

As used herein, the terms "lens" and "ophthalmic device" refer to devices that reside in or on the eye. These devices can provide optical correction, wound care, drug delivery, diagnostic functionality, cosmetic enhancement or effect or a combination of these properties. The term lens includes but is not limited to soft contact lenses, hard contact lenses, intraocular lenses, overlay lenses, ocular inserts, and optical inserts.

As used herein, the phrase "without a surface treatment" means that the exterior surfaces of the devices of the present invention are not separately treated to improve the wettability of the device. Treatments which may be foregone because of the present invention include, plasma treatments, grafting, coating and the like. However, coatings which provide properties other than improved wettability, such as, but not limited to antimicrobial coatings and the application of color or other cosmetic enhancement may be applied to devices of the present invention.

As used herein the term "silicone containing compatibilizing component" means reaction components which contain at least one silicone and at least one hydroxyl group. Such components have been disclosed in US. Serial Nos. 10/236,538 and 10/236,762

Suitable diluents include those, which possess both a hydrophilic and a hydrophobic nature. It has been found that the hydrophilic nature may be characterized by hydrogen donating ability, using Kamlet alpha values. The hydrophobic nature of the diluent may be characterized by the Hansen solubility parameter δp. Suitable diluents for the present invention are good hydrogen bond donors and polar. As used herein a "good" hydrogen bond donor, will donate hydrogen at least as readily as 3-methyl-3-pentanol. For certain diluents it is possible to measure the hydrogen bond donating ability by measuring the Kamlet alpha value (or as used herein "alpha value"). Suitable alpha values are those between 0.05 and 1 and preferably between 0.1 and 0.9.

The diluents useful in the present invention should also be relatively non-polar. The selected diluent should have a polarity sufficiently low to solubilize the non-polar components in the reactive mixture at reaction conditions. One way to characterize the polarity of the diluents of the present invention is via the Hansen solubility parameter, δp. The δp is less than 10, and preferably less than 6

It will be appreciated that the properties of the selected hydrophilic and hydrophobic components may effect the properties of the diluents which will provide the desired compatibilization. For example, if the reaction mixture contains only moderately polar components, diluents having moderate δp may be used. If however, the reaction mixture contains strongly polar components, the diluent may need to have a high δp.

Specific diluents which may be used include 1-ethoxy-2-propanol, diisopropylaminoethanol, isopropanol, 3,7-dimethyl-3-octanol, 1-decanol, 1-dodecanol, 1-octanol, 1-pentanol, 2-pentanol, 1-hexanol, 2-hexanol, 2-octanol, 3-methyl-3-pentanol, *tert-amyl* alcohol, tert-butanol, 2-butanol, 1-butanol, 2-methyl-2-pentanol, 2-propanol, 1-propanol, ethanol, 2-ethyl-1-butanol, SiGMA acetate, 1-*tert*-butoxy-2-propanol, 3,3-dimethyl-2-butanol, *tert*-butoxyethanol, 2-octyl-1-dodecanol, decanoic acid, octanoic acid, dodecanoic acid, 2-(diisopropylamino)ethanol mixtures thereof and the like.

Classes of suitable diluents include alcohols having 2 to 20 carbons, amides having 10 to 20 carbon atoms derived from primary amines and carboxylic acids having 8 to 20 carbon atoms. In some embodiments primary and tertiary alcohols are preferred. Preferred classes include alcohols having 5 to 20 carbons and carboxylic acids having 10 to 20 carbon atoms.

Preferred diluents include 3,7-dimethyl-3-octanol, 1-dodecanol, 1-decanol, 1-octanol, 1-pentanol, 1-hexanol, 2-hexanol, 2-octanol, 3-methyl-3-pentanol, 2-pentanol, t-amyl alcohol, *tert*-butanol, 2-butanol, 1-butanol, 2-methyl-2-pentanol, 2-ethyl-1-butanol, ethanol, 3,3-dimethyl-2-butanol, 2-octyl-1-dodecanol, decanoic acid, octanoic acid, dodecanoic acid, mixtures thereof and the like.

More preferred diluents include 3,7-dimethyl-3-octanol, 1-dodecanol, 1-decanol, 1-octanol, 1-pentanol, 1-hexanol, 2-hexanol, 2-octanol, 1-dodecanol, 3-methyl-3-pentanol, 1-pentanol, 2-pentanol, t-amyl alcohol, *tert*-butanol, 2-butanol, 1-butanol, 2-methyl-2-pentanol, 2-ethyl-1-butanol, 3,3-dimethyl-2-butanol, 2-octyl-1-dodecanol, mixtures thereof and the like.

Mixtures of diluents may be used. In some embodiments it may be advantageous to use diluents with different properties. Moreover, it should be appreciated that when mixtures are used, the mixtures may include a diluent with properties within those specified herein and diluent(s) which do not possess the defined properties, or may contain diluents which each contain only one of the specified properties, so long as the alpha value and the $\delta p$ of the diluent mixture is within the values specified herein.

The diluents may be used in amounts up to about 50% by weight of the total of all components in the reactive mixture. More preferably the diluent is used in amounts less than about 45% and more preferably in amounts between about 15 and about 40% by weight of the total of all components in the reactive mixture.

The one or more silicone-containing components and one or more hydrophilic components used to make the polymer of this invention can be any of the known components used in the prior art to make silicone hydrogels. These terms silicone-containing component and hydrophilic component are not mutually exclusive, in that, the silicone-containing component can be somewhat hydrophilic and the hydrophilic component can comprise some silicone, because the silicone-containing component can have hydrophilic groups and the hydrophilic components can have silicone groups.

Further, silicone-containing component(s) and hydrophilic component(s) can be reacted prior to polymerization to form a prepolymer which is later polymerized in the presence of the diluent to form the polymer of this invention. When prepolymers or macromers are used, it is preferred to polymerize at least one silicone-containing monomer and at least one hydrophilic monomer in the presence of the diluent, wherein the silicone-containing monomers and the hydrophilic monomers differ. The term "monomer" used herein refers to low molecular weight compounds (i.e. typically having number average molecular weights less than 700) that can be polymerized. Thus, it is understood that the terms "silicone-containing monomers" and "hydrophilic monomers" include monomers, macromonomers and prepolymers.

A silicone-containing component is one that contains at least one [-Si-O-Si] group, in a monomer, macromer or prepolymer. Preferably, the Si and attached O are present in the silicone-containing component in an amount greater than 20 weight percent, and more preferably greater than 30 weight percent of the total molecular weight of the silicone-containing component. Useful silicone-containing components preferably comprise polymerizable functional groups such as acrylate, methacrylate, acrylamide, methacrylamide, N-vinyl lactam, N-vinylamide, and styryl functional groups. Examples of silicone-containing components which are useful in this invention may be found in U.S. Pat. Nos. 3,808,178; 4,120,570; 4,136,250; 4,153,641; 4,740,533; 5,034,461 and 5,070,215, and EP080539. These references disclose many examples of olefinic silicone-containing components.

## Calculations

The following describes a calculation which may be useful in determining whether silicone hydrogel contact lenses with PVP will be hazy.

The moles of a component are calculated, as is known by one of ordinary skill in the art. Then the weight of silicon in a component is calculated by multiplying the grams of a component present in the composition by the weight fraction of the molecular weight that is comprised of silicon. For example, the molecular weight of SiMAA is 422.8g. Since SiMAA contains three Si atoms, the weight fraction of Si is 3x28.09/422.8 = 0.199, where 28.09g is the molecular weight of silicon. Therefore; the grams of silicon in X grams of SiMAA are 0.199*X. Then, the moles of silicon are calculated.

The grams of hydrogen bond donor groups ("HBD") in a component are calculated by multiplying the grams of a component in the formulation by the weight fraction HBD groups. For example, the molecular weight of HEMA is 130.14g. Since HEMA contains one hydroxyl group, the weight fraction of HBD groups is 17/130.14 = 0.131. (Using 17g for hydroxyl) Therefore, the grams of HBD groups in X grams of HEMA are 0.131 *X.

The moles of HBD groups ('moles HBD') are calculated by dividing the grams of HBD groups present in a component by the molecular weight of the HBD group (17g for hydroxyl (-OH), 15g for amide (-NH)).

The grams of HBA (hydrogen bond acceptor) groups in a component ('grams HBA') are calculated by multiplying the grams of a component in the formulation by the weight fraction HBA groups. For example, the molecular weight of DMA is 99.13g. Since DMA contains one HBA (amide carbonyl) group, the weight fraction of HBA groups is 28/99.13 = 0.282, where 28g is the molecular weight of the amide carbonyl. The grams of HBA groups in X grams of DMA are 0.282*X. For PVP, the moles of HBA groups are calculated based on the molecular weight of the monomer repeating unit (111.14g).

HTS ratio (HTS refers to hydrogen bond donor to silicon) is calculated by taking the sum of moles of HBD groups and dividing by the sum of the moles of silicon in the formulation, excluding diluent.

The moles HBD preferred are calculated by adding twice the number of moles of PVP present (including diluent) to the number of moles of HBA (hydrogen bond acceptor) groups from other sources. For the purposes of this specification, HBA groups are defined as carbonyls that are part of amide, carbamate, lactam, or urea functional groups.

The 'moles HBD to moles HBA (HMWHP) ratio' is calculated by dividing the number of moles of HBD groups present in the formulation (excluding diluent) by the number of moles of HBA groups present in the high molecular weight

hydrophilic polymer (referred to as "HMWHP") (e.g. PVP).

The 'Ratio of moles HBD present to moles HBD preferred' is calculated by dividing the total number of moles of HBD groups in the formulation (including diluent) by the calculated number of moles of HBD groups needed.

In lenses formed from compositions containing PVP, the following are the preferred ratios. The preferred range of 'moles HBD to moles HBA (HMWHP) ratio' is ≥ about 0.8, more preferred is ≥ about 0.8 to ≤ about 5, more preferred is ≥ about 1.3 to ≤ about 5, and most preferred is ≥ about 1.7 to ≤ about 5. The preferred range for 'Ratio of moles HBD present to moles HBD preferred' is ≥ about 0.6, more preferred is ≥ about 0.6 to < about 4.5, more preferred is ≥ about 0.8 to < about 4.5, and most preferred is ≥ about 1.0 to ≤ about 3.0. The preferred range for 'HTS ratio' is > about 0.14, more preferred is > about 0.17 to ≤ about 0.35, and most preferred is > about 0.18 to ≤ about 0.35. One of ordinary skill in the art would understand that these calculations are useful for other contact lenses of the present invention but may have different preferred ranges depending on the HMWHP used.

Examples

Further examples of suitable silicone-containing monomers are polysiloxanylalkyl(meth)acrylic monomers represented by the following formula:

Formula I

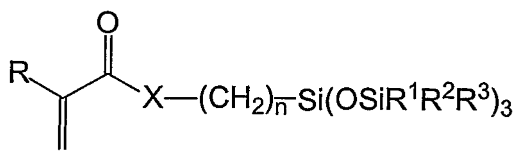

wherein: R denotes H or lower alkyl; X denotes O or $NR^4$; each $R^4$ independently denotes hydrogen or methyl, each $R^1$-$R^3$ independently denotes a lower alkyl radical or a phenyl radical, and n is 1 or 3 to 10.

Examples of these polysiloxanylalkyl (meth)acrylic monomers include methacryloxypropyl tris(trimethylsiloxy) silane, pentamethyldisiloxanyl methylmethacrylate, and methyldi(trimethylsiloxy)methacryloxymethyl silane. Methacryloxypropyl tris(trimethylsiloxy)silane is the most preferred.

One preferred class of silicone-containing components is a poly(organosiloxane) prepolymer represented by formula II:

Formula II

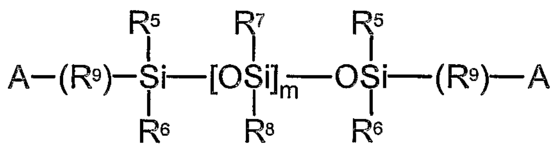

wherein each A independently denotes an activated unsaturated group, such as an ester or amide of an acrylic or a methacrylic acid or an alkyl or aryl group (providing that at least one A comprises an activated unsaturated group capable of undergoing radical polymerization); each of $R^5$, $R^6$, $R^7$ and $R^8$ are independently selected from the group consisting of a monovalent hydrocarbon radical or a halogen substituted monovalent hydrocarbon radical having 1 to 18 carbon atoms which may have ether linkages between carbon atoms;

$R^9$ denotes a divalent hydrocarbon radical having from 1 to 22 carbon atoms, and

m is 0 or an integer greater than or equal to 1, and preferable 5 to 400, and more preferably 10 to 300. One specific example is α, ω-bismethacryloxypropyl polydimethylsiloxane. Another preferred example is mPDMS (monomethacryloxypropyl terminated mono-n-butyl terminated polydimethylsiloxane).

Another useful class of silicone containing components includes silicone-containing vinyl carbonate or vinyl carbamate monomers of the following formula:

Formula III

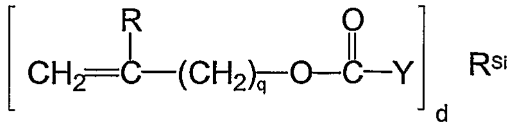

wherein: Y denotes O, S. or NH; $R^{Si}$ denotes a silicone-containing organic radical; R denotes hydrogen or methyl; d is 1, 2, 3 or 4; and q is 0 or 1. Suitable silicone-containing organic radicals $R^{Si}$ include the following:

$-(CH_2)_qSi[(CH_2)_sCH_3]_3$ ;

$-(CH_2)_qSi[OSi(CH_2)_sCH_3]_3$ ;

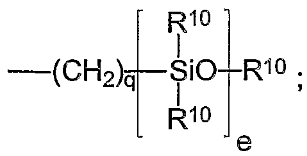

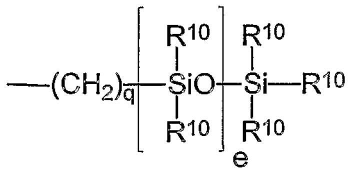

wherein:

$R^{10}$ denotes

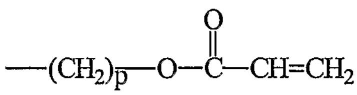

Wherein p is 1 to 6; $R^{10}$ denotes an alkyl radical or a fluoroalkyl radical having 1 to 6 carbon atoms; e is 1 to 200; q is 1, 2, 3 or 4; and s is 0, 1, 2, 3, 4 or 5.

The silicone-containing vinyl carbonate or vinyl carbamate monomers specifically include: 1,3-bis[4-(vinyloxycarbonyloxy)but-1-yl]tetramethyl-isiloxane 3-(vinyloxycarbonylthio) propyl-[tris (trimethylsiloxysilane]; 3-[tris(trimethylsiloxy)silyl] propyl allyl carbamate; 3-[tris(trimethylsiloxy)wilyl] propyl vinyl carbamate; trimethylsilylethyl vinyl carbonate; trimethylsilylmethyl vinyl carbonate, and

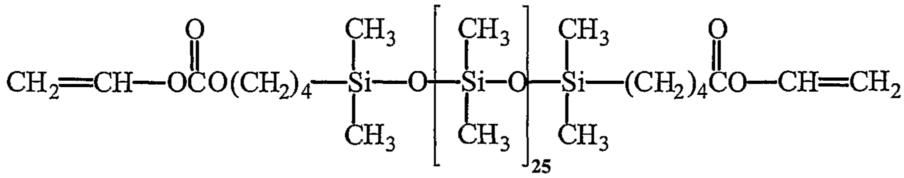

Another class of silicone-containing components includes compounds of the following formulae:
Formulae IV-VI

(*D*A*D*G)$_a$ *D*D*$E^1$;

E(*D*G*D*A)$_a$ *D*G*D*$E^1$ or;

$E(*D*A*D*G)_a *D*A*D*E^1$

wherein:

D denotes an alkyl diradical, an alkyl cycloalkyl diradical, a cycloalkyl diradical, an aryl diradical or an alkylaryl diradical having 6 to 30 carbon atoms,

G denotes an alkyl diradical, a cycloalkyl diradical, an alkyl cycloalkyl diradical, an aryl diradical or an alkylaryl diradical having 1 to 40 carbon atoms and which may contain ether, thio or amine linkages in the main chain;

* denotes a urethane or ureido linkage;

$_a$ is at least 1;

A denotes a divalent polymeric radical of formula:

Formula VII

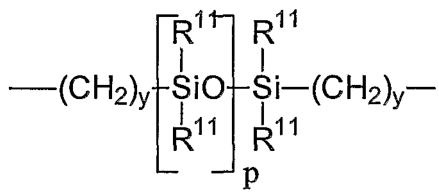

$R^{11}$ independently denotes an alkyl or fluoro-substituted alkyl group having 1 to10 carbon atoms which may contain ether linkages between carbon atoms; y is at least 1; and p provides a moiety weight of 400 to 10,000; each of E and $E^1$ independently denotes a polymerizable unsaturated organic radical represented by formula:

Formula VIII

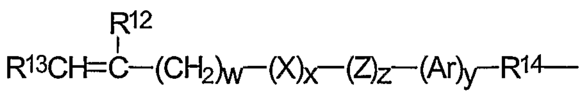

wherein: $R^{12}$ is hydrogen or methyl; $R^{13}$ is hydrogen, an alkyl radical having 1 to 6 carbon atoms, or a -CO-Y-$R^{15}$ radical wherein Y is -O-,Y-S- or -NH-; $R^{14}$ is a divalent radical having 1 to 12 carbon atoms; X denotes -CO- or -OCO-; Z denotes -O- or -NH-; Ar denotes an aromatic radical having 6 to 30 carbon atoms; w is 0 to 6; x is 0 or 1; y is 0 or 1; and z is 0 or 1.

A preferred silicone-containing component is represented by the following formula:

Formula IX

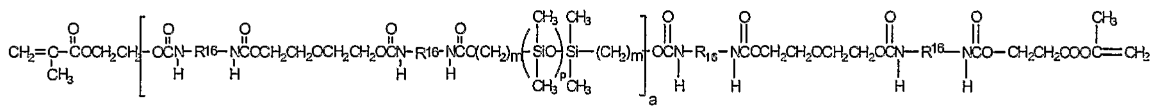

wherein $R^{16}$ is a diradical of a diisocyanate after removal of the isocyanate group, such as the diradical of isophorone diisocyanate. Another preferred silicone containing macromer is compound of formula X (in which x + y is a number in the range of 10 to 30) formed by the reaction of fluoroether, hydroxy-terminated polydimethylsiloxane, isophorone diisocyanate and isocyanatoethylmethacrylate.

Formula X

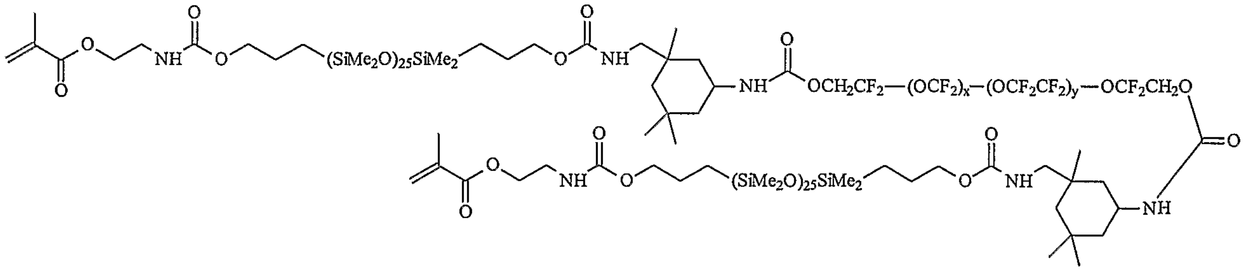

Other silicone-containing components suitable for use in this invention include those described is WO 96/31792 such as macromers containing polysiloxane, polyalkylene ether, diisocyanate, polyfluorinated hydrocarbon, polyfluorinated ether and polysaccharide groups. U.S. Pat. Nos. 5,321,108; 5,387,662 and 5,539,016 describe polysiloxanes with a polar fluorinated graft or side group having a hydrogen atom attached to a terminal difluoro-substituted carbon atom. Such polysiloxanes can also be used as the silicone monomer in this invention.

Hydrophilic components include those which are capable of providing at least about 20% and preferably at least about 25% water content to the resulting lens when combined with the remaining reactive components. Suitable hydrophilic components may be present in amounts between about 10 to about 60 weight% based upon the weight of all reactive components. About 15 to about 50 weight % and more preferably between about 20 to about 40 weight %. The hydrophilic monomers that may be used to make the polymers of this invention have at least one polymerizable double bond and at least one hydrophilic functional group. Examples of polymerizable double bonds include acrylic, methacrylic, acrylamido, methacrylamido, fumaric, maleic, styryl, isopropenylphenyl, O-vinylcarbonate, O-vinylcarbamate, allylic, O-vinylacetyl and N-vinyllactam and N-vinylamido double bonds. Such hydrophilic monomers may themselves be used as crosslinking agents. "Acrylic-type" or "acrylic-containing" monomers are those monomers containing the acrylic group (CR'H=CRCOX)

wherein R is H or $CH_3$, R' is H, alkyl or carbonyl, and X is O or N, which are also known to polymerize readily, such as N,N-dimethylacrylamide (DMA), 2-hydroxyethyl acrylate , glycerol methacrylate, 2-hydroxyethyl methacrylamide, polyethyleneglycol monomethacrylate, methacrylic acid, acrylic acid and mixtures thereof.

Hydrophilic vinyl-containing monomers which may be incorporated into the hydrogels of the present invention include monomers such as N-vinyl lactams (e.g. N-vinyl pyrrolidone (NVP)), N-vinyl-N-methyl acetamide, N-vinyl-N-ethyl acetamide, N-vinyl-N-ethyl formamide, N-vinyl formamide, N-2-hydroxyethyl vinyl carbamate, N-carboxy-β-alanine N-vinyl ester, with NVP being preferred.

Other hydrophilic monomers that can be employed in the invention include polyoxyethylene polyols having one or more of the terminal hydroxyl groups replaced with a functional group containing a polymerizable double bond. Examples include polyethylene glycol with one or more of the terminal hydroxyl groups replaced with a functional group containing a polymerizable double bond. Examples include polyethylene glycol reacted with one or more molar equivalents of an end-capping group such as isocyanatoethyl methacrylate ("IEM"), methacrylic anhydride, methacryloyl chloride, vinylbenzoyl chloride, or the like, to produce a polyethylene polyol having one or more terminal polymerizable olefinic groups bonded to the polyethylene polyol through linking moieties such as carbamate or ester groups.

Still further examples are the hydrophilic vinyl carbonate or vinyl carbamate monomers disclosed in U.S. Pat. No.5,070,215, and the hydrophilic oxazolone monomers disclosed in U.S. Pat. No. 4,190,277. Other suitable hydrophilic monomers will be apparent to one skilled in the art.

More preferred hydrophilic monomers which may be incorporated into the polymer of the present invention include hydrophilic monomers such as N,N-dimethyl acrylamide (DMA), 2-hydroxyethyl acrylate, glycerol methacrylate, 2-hydroxyethyl methacrylamide, N-vinylpyrrolidone (NVP), and polyethyleneglycol monomethacrylate.

Most preferred hydrophilic monomers include DMA, NVP and mixtures thereof. As used herein, "high molecular weight hydrophilic polymer" may refer to substances having a weight average molecular weight of no less than 100,000 Daltons, wherein said substances upon incorporation to silicone hydrogel formulations, increase the wettability of the cured silicone hydrogels. The preferred weight average molecular weight of these high molecular weight hydrophilic polymers is greater than 150,000; more preferably between 150,000 to 2,000,000 Daltons, more preferably still between 300,000 to 1,800,000 Daltons, most preferably 500,000 to 1,500,000 Daltons.

The molecular weight of hydrophilic polymers of the invention is expressed by the K-value, based on kinematic viscosity measurements, as described in Encyclopedia of Polymer Science and Engineering, N-Vinyl Amide Polymers, Second edition, Vol 17, pgs. 198-257, John Wiley & Sons Inc. When expressed in this manner, hydrophilic monomers having K-values of greater than 46 and preferably between 46 and 150. The high molecular weight hydrophilic polymers are present in the formulations of these devices in an amount sufficient to provide contact lenses, which without surface

modification provide at least a 10% improvement in wettability and preferably provide wettable lenses. For a contact lens "wettable" is a lens which displays an advancing dynamic contact angle of less than 80°, preferably less than 70° and more preferably less than 60°

Suitable amounts of high molecular weight hydrophilic polymer include from about 1 to about 15 weight percent, more preferably about 3 to about 15 percent, most preferably about 3 to about 12 percent, all based upon the total of all reactive components.

Examples of high molecular weight hydrophilic polymers include but are not limited to polyamides, polylactones, polyimides, polylactams and functionalized polyamides, polylactones, polyimides, polylactams, such as DMA functionalized by copolymerizing DMA with a lesser molar amount of a hydroxyl-functional monomer such as HEMA, and then reacting the hydroxyl groups of the resulting copolymer with materials containing radical polymerizable groups, such as isocyanatoethylmethacrylate or methacryloyl chloride. Hydrophilic prepolymers made from DMA or n-vinyl pyrrolidone with glycidyl methacrylate may also be used. The glycidyl methacrylate ring can be opened to give a diol which may be used in conjunction with other hydrophilic prepolymer in a mixed system to increase the compatibility of the high molecular weight hydrophilic polymer, hydroxyl-functionalized silicone containing monomer and any other groups which impart compatibility. The preferred high molecular weight hydrophilic polymers are those that contain a cyclic moiety in their backbone, more preferably, a cyclic amide or cyclic imide. High molecular weight hydrophilic polymers include but are not limited to poly-N-vinyl pyrrolidone, poly-N-vinyl-2- piperidone, poly-N-vinyl-2-caprolactam, poly-N-vinyl-3-methyl-2-caprolactam, poly-N-vinyl-3-methyl-2-piperidone, poly-N-vinyl-4-methyl-2- piperidone, poly-N-vinyl-4-methyl-2-caprolactam, poly-N-vinyl-3-ethyl-2- pyrrolidone, and poly-N-vinyl-4,5-dimethyl-2-pyrrolidone, polyvinylimidazole, poly-N-N-dimethylacrylamide, polyvinyl alcohol, polyacrylic acid, polyethylene oxide, poly 2 ethyl oxazoline, heparin polysaccharides, polysaccharides, mixtures and copolymers (including block or random, branched, multichain, comb-shaped or star shaped) thereof where poly-N-vinylpyrrolidone (PVP) is particularly preferred. Copolymers might also be used such as graft copolymers of PVP.

The high molecular weight hydrophilic polymers provide improved wettability, and particularly improved in vivo wettability to the medical devices of the present invention. Without being bound by any theory, it is believed that the high molecular weight hydrophilic polymers are hydrogen bond receivers which in aqueous environments, hydrogen bond to water, thus becoming effectively more hydrophilic. The absence of water facilitates the incorporation of the hydrophilic polymer in the reaction mixture. Aside from the specifically named high molecular weight hydrophilic polymers, it is expected that any high molecular weight polymer will be useful in this invention provided that when said polymer is added to a silicone hydrogel formulation, the hydrophilic polymer (a) does not substantially phase separate from the reaction mixture and (b) imparts wettability to the resulting cured polymer. In some embodiments it is preferred that the high molecular weight hydrophilic polymer be soluble in the diluent at processing temperatures. Manufacturing processes which use water or water soluble diluents may be preferred due to their simplicity and reduced cost. In these embodiments high molecular weight hydrophilic polymers which are water soluble at processing temperatures are preferred.

In certain embodiments a hydroxyl containing component is also included. The hydroxyl containing component that may be used to make the polymers of this invention have at least one polymerizable double bond and at least one hydrophilic functional group. Examples of polymerizable double bonds include acrylic, methacrylic, acrylamido, methacrylamido, fumaric, maleic, styryl, isopropenylphenyl, O-vinylcarbonate, O-vinylcarbamate, allylic, O-vinylacetyl and N-vinyllactam and N-vinylamido double bonds. The hydroxyl containing component may also act as a crosslinking agent. In addition the hydroxyl containing component comprises a hydroxyl group. This hydroxyl group may be a primary, secondary or tertiary alcohol group, and may be located on an alkyl or aryl group. Examples of hydroxyl containing monomers that may be used include but are not limited to 2-hydroxyethyl methacrylate, 2-hydroxyethyl acrylate, 2-hydroxyethyl methacrylamide, 2-hydroxyethyl acrylamide, N-2-hydroxyethyl vinyl carbamate, 2-hydroxyethyl vinyl carbonate, 2-hydroxypropyl methacrylate, hydroxyhexyl methacrylate, hydroxyoctyl methacrylate and other hydroxyl functional monomers as disclosed in U.S. Patents 5,006,622; 5,070,215; 5,256,751 and 5,311,223. Preferred hydrophilic components include 2-hydroxyethyl methacrylate.

It is generally necessary to add one or more cross-linking agents, also referred to as cross-linking monomers, to the reaction mixture, such as ethylene glycol dimethacrylate ("EGDMA"), trimethylolpropane trimethacrylate ("TMPTMA"), glycerol trimethacrylate, polyethylene glycol dimethacrylate (wherein the polyethylene glycol preferably has a molecular weight up to, e.g., about 5000), and other polyacrylate and polymethacrylate esters, such as the end-capped polyoxyethylene polyols described above containing two or more terminal methacrylate moieties. The cross-linking agents are used in the usual amounts, e.g., from about 0.000415 to about 0.0156 mole per 100 grams of reactive components in the reaction mixture. (The reactive components are everything in the reaction mixture except the diluent and any additional processing aids which do not become part of the structure of the polymer.) Alternatively, if the hydrophilic monomers and/or the silicone-containing monomers act as the cross-linking agent, the addition of a crosslinking agent to the reaction mixture is optional. Examples of hydrophilic monomers which can act as the crosslinking agent and when present do not require the addition of an additional crosslinking agent to the reaction mixture include polyoxyethylene polyols described above containing two or more terminal methacrylate moieties.

An example of a silicone-containing monomer which can act as a crosslinking agent and, when present, does not require the addition of a crosslinking monomer to the reaction mixture includes α, ω-bismethacryloypropyl polydimethylsiloxane.

The reactive mixture may contain additional components such as, but not limited to, UV absorbers, medicinal agents, antimicrobial compounds, reactive tints, pigments, copolymerizable and nonpolymerizable dyes, release agents and combinations thereof.

A polymerization catalyst is preferably included in the reaction mixture. The polymerization initiators includes compounds such as lauryl peroxide, benzoyl peroxide, isopropyl percarbonate, azobisisobutyronitrile, and the like, that generate free radicals at moderately elevated temperatures, and photoinitiator systems such as aromatic alpha-hydroxy ketones, alkoxyoxybenzoins, acetophenones, acylphosphine oxides, bisacylphosphine oxides, and a tertiary amine plus a diketone, mixtures thereof and the like. Illustrative examples of photoinitiators are 1-hydroxycyclohexyl phenyl ketone, 2-hydroxy-2-methyl-1-phenyl-propan-1-one, bis(2,6-dimethoxybenzoyl)-2,4-4-trimethylpentyl phosphine oxide (DMBAPO), bis(2,4,6-trimethylbenzoyl)-phenyl phosphineoxide (Irgacure 819), 2,4,6-trimethylbenzyldiphenyl phosphine oxide and 2,4,6-trimethylbenzoyl diphenylphosphine oxide, benzoin methyl ester and a combination of camphorquinone and ethyl 4-(N,N-dimethylamino)benzoate. Commercially available visible light initiator systems include Irgacure 819, Irgacure 1700, Irgacure 1800, Irgacure 819, Irgacure 1850 (all from Ciba Specialty Chemicals) and Lucirin TPO initiator (available from BASF). Commercially available UV photoinitiators include Darocur 1173 and Darocur 2959 (Ciba Specialty Chemicals). These and other photoinitators which may be used are disclosed in Volume III, Photoinitiators for Free Radical Cationic & Anionic Photopolymerization, 2nd Edition by J. V. Crivello & K. Dietliker; edited by G. Bradley; John Wiley and Sons; New York; 1998. The initiator is used in the reaction mixture in effective amounts to initiate photopolymerization of the reaction mixture, e. g., from about 0.1 to about 2 parts by weight per 100 parts of reactive monomer. Polymerization of the reaction mixture can be initiated using the appropriate choice of heat or visible or ultraviolet light or other means depending on the polymerization initiator used.

Alternatively, initiation can be conducted without a photoinitiator using, for example, e-beam. However, when a photoinitiator is used, the preferred initiators are bisacylphosphine oxides, such as bis(2,4,6-trimethylbenzoyl)-phenyl phosphine oxide (Irgacure 819®) or a combination of 1-hydroxycyclohexyl phenyl ketone and bis(2,6-dimethoxybenzoyl)-2,4-4-trimethylpentyl phosphine oxide (DMBAPO), and the preferred method of polymerization initiation is visible light. The most preferred is bis(2,4,6-trimethylbenzoyl)-phenyl phosphine oxide (Irgacure 819®).

The preferred range of silicone-containing monomer present in the reaction mixture is from about 5 to 95 weight percent, more preferably about 30 to 85 weight percent, and most preferably about 45 to 75 weight percent of the reactive components in the reaction mixture. The preferred range of hydrophilic monomer present in the above invention is from about 5 to 80 weight percent, more preferably about 10 to 60 weight percent, and most preferably about 20 to 50 weight percent of the reactive components in the reaction mixture. The preferred range of diluent present in the above invention is from about 2 to 70 weight percent, more preferably about 5 to 50 weight percent, and most preferably about 15 to 40 weight percent of the total reaction mixture (including reactive and nonreactive components). It has been surprisingly found that when the diluents of the present invention are used wettable biomedical devices, and particularly wettable ophthalmic devices may be made without incorporating a silicone containing compatibilizing component.

Preferred combinations of reactive components and diluents are those having from about 25 to about 55 weight% silicone-containing monomer, about 20 to about 40 weight % hydrophilic monomer, from about 5 to about 20 weight % of an hydroxyl containing component, from about 0.2 to about 3 weight % of a crosslinking monomer, from about O to about 3 weight% of a UV absorbing monomer, from about 2 to about 10 weight % of an high molecular weight hydrophilic polymer (all based upon the weight % of all reactive components) and about 20 to about 50 weight% (weight% of all components, both reactive and non-reactive) of one or more of the claimed diluents.

The reaction mixtures of the present invention can be formed by any of the methods know to those skilled in the art, such as shaking or stirring, and used to form polymeric articles or devices by known methods.

For example, the biomedical devices of the invention may be prepared by mixing reactive components and the diluent(s) with a polymerization initator and curing by appropriate conditions to form a product that can be subsequently formed into the appropriate shape by lathing, cutting and the like. Alternatively, the reaction mixture may be placed in a mold and subsequently cured into the appropriate article.

Various processes are known for processing the reaction mixture in the production of contact lenses, including spiricasting and static casting. Spincasting methods are disclosed in U.S. Pat. Nos. 3,408,429 and 3,660,545, and static casting methods are disclosed in U.S. Pat. Nos. 4,113,224 and 4,197,266. The preferred method for producing contact lenses comprising the polymer of this invention is by the molding of the silicone hydrogels, which is economical, and enables precise control over the final shape of the hydrated lens. For this method, the reaction mixture is placed in a mold having the shape of the final desired silicone hydrogel, i.e., water-swollen polymer, and the reaction mixture is subjected to conditions whereby the monomers polymerize, to thereby produce a polymer/diluent mixture in the shape of the final desired product. Then, this polymer/diluent mixture is treated with a solvent to remove the diluent and ultimately replace it with water, producing a silicone hydro gel having a final size and shape which are quite similar to the size and

shape of the original molded polymer/diluent article. This method can be used to form contact lenses and is further described in U.S. Pat. Nos. 4,495,313; 4,680,336; 4,889,664; and 5,039,459.

The biomedical devices, and particularly ophthalmic lenses of the present invention have a balance of properties which makes them particularly useful. Such properties include clarity, water content, oxygen permeability and contact angle. Thus, in one embodiment, the biomedical devices are contact lenses having a water content of greater than about 17%, preferably greater than about 20% and more preferably greater than about 25%.

As used herein clarity means substantially free from visible haze. Preferably clear lenses have a haze value of less than about 150%, more preferably less than about 100%.

Suitable oxygen permeabilities are preferably greater than about 40 barrer and more preferably greater than about 60 barrer.

Also, the biomedical devices, and particularly ophthalmic devices and contact lenses have contact angles (advancing) which are less than about 80°, preferably less than about 70° and more preferably less than about 65°. In some preferred embodiments the articles of the present invention have combinations of the above described oxygen permeability, water content and contact angle. All combinations of the above ranges are deemed to be within the present invention.

Alpha values were measured using the following procedure. A 0.05 wt % solution of 4-nitroanisole (Aldrich, CAS# 100-17-4) stock solution in HPLC grade methylene chloride was prepared. A 0.1 wt % solution of Dimroth's betaine (Aldrich, CAS # 10081-39-7) in HPLC grade methylene chloride was prepared. The stock solution was stored in the dark until used.

To 5 ml of test diluent were added 100 microliters of the above 4-nitroanisole solution to make the 4-nitroanisole test sample solution. The test diluent was placed in the reference beam of the UV-VIS dual beam spectrometer (a Unicam Model UV 300 UV-VIS dual beam spectrometer was used in this procedure). An absorption scan was run from 250 to 350 nm. If maximum absorption was greater than 2 absorbance units, the 4-nitroanisole test sample solution was diluted with test diluent and the absorption scan measurement was repeated. The peak wavelength of the maximum absorption was recorded.

To 5 ml of test diluent were added 500 microliters of the above Dimroth's betaine solution. The test diluent was placed in the reference beam of the UV-VIS dual beam spectrometer. An absorption scan was run from 550 to 800 nm. If maximum absorption was greater than 2 absorbance units, the Dimroth's betaine test sample solution was diluted with test diluent and the absorption scan measurement was repeated. The peak wavelength of the maximum absorption was recorded.

The alpha value was calculated as follows:

1. Convert the $\lambda_{max}$ recorded for the 4-nitroanisole test sample solution in nm to $cm^{-1}$ by inverting and multiplying by $10^7$.

2. Convert the $\lambda_{max}$ recorded for the 4-nitroanisole test sample solution in $cm^{-1}$ to kilokaysers (kK) by dividing by 1000. Designate the result as $\upsilon_1$.

3. Repeat steps 1 and 2 for the $\lambda_{max}$ recorded for the Dimroth dye test sample solution. Designate the result as $\upsilon_{obsd}$.

4. Calculate $\upsilon_{calc} = (-\upsilon_1 \times 1.873) + 74.58.$

5. Calculate $\alpha = (\upsilon_{obsd} - \upsilon_{calc})/6.24.$

The alpha values are shown in Table 1, below.

**Table 1**

| Diluent | P (Mpa$^{-1/2}$) | H (Mpa$^{-1/2}$) | alpha |
|---|---|---|---|
| 1-decanol, >99% | 2.6 | 10.0 | 0.593 |
| 1-dodecanol, >98% | 2.3* | 9.3* | 0.575 |
| 1-octanol, >99% | 3.3 | 11.9 | 0.629 |
| 1-hexanol, >98% | 4.1* | 12.5* | 0.647 |
| 1-pentanol, >99% | 4.5 | 13.9 | 0.685 |
| 2-pentanol | 6.4 | 13.3 | |

(continued)

| Diluent | P (Mpa$^{-1/2}$) | H (Mpa$^{-1/2}$) | alpha |
|---|---|---|---|
| 2-hexanol, >99% | 4.0* | 12.4* | 0.507 |
| 2-octanol | 4.9 | 11.0 | 0.474 |
| 2-decanol | 3.9 | 10.0 | |
| 1-butanol, >99.8% | 5.7 | 15.8 | 0.704 |
| t-amyl alcohol | 4.7* | 13.3* | 0.278 |
| isopropanol, >99.5% | 6.1 | 16.4 | 0.643 |
| 3M3P | 4.1* | 12.5* | 0.211 |
| D3O, >97% | 2.7* | 10.1* | 0.267 |
| ethanol, anhydrous | 8.8 | 19.4 | 0.992 |
| 1-ethoxy-2-propanol, 90-95% | 8.2 | 13.1 | 0.464 |
| 1-t-butoxy-2-propanol | 6.1* | 12.7* | |
| 2-(diisopropylamino)ethanol , >99% | 7.4* | 10.5* | 0.378 |
| 2-butanol, >99.5% | 5.7 | 14.5 | 0.540 |
| 1-propanol, >99.5% | 6.8 | 17.4 | 0.743 |
| 2-methyl-2-pentanol, >99% | 4.1* | 12.5* | 0.290 |
| t-butanol, >99% | 5.1 | 14.7 | 0.395 |
| SiGMA acetate | 4.6* | 8.4* | |
| N-ethylacetamide, >99% | 10.7* | 8.2* | |
| N-tert-butylformamide, >98% | 9* | 7.6* | |
| N-methylpropionamide, >98% | 10.7* | 8.3* | |
| N,N -dimethylpropionamide | 14.6* | 5.5* | |
| N-octylacetamide | 5.6* | 6* | |
| octanoic acid | 3.3 | 8.2 | |
| decanoic acid | 2.3* | 7.7* | |
| lauric (dodecanoic) acid | 2* | 7.1* | |
| valeric acid | 4.1* | 10.3* | |
| Dimethylsulfoxide | 16.4 | 10.2 | 0.0* |
| acetonitrile, >99% | 18.0 | 6.1 | 0.0* |
| N-methylpyrrolidone | 12.3 | 7.2 | 0.0* |
| Acetone | 10.4 | 7.0 | 0.08* |
| THF, >99% | 5.7 | 8.0 | 0.0* |
| EtOAc | 5.3 | 7.2 | 0.0* |
| toluene, >99.8% | 1.4 | 2.0 | 0.0* |
| Triethylamine | 0.4 | 1.0 | 0.0* |
| Dodecane | 0.0 | 0.0 | 0.0* |
| Methanol, >99.9% | 12.3 | 22.3 | 0.949 |
| acetic acid, glacial | 8.0 | 13.5 | 1.120 |

(continued)

| Diluent | P ($Mpa^{-1/2}$) | H ($Mpa^{-1/2}$) | alpha |
|---|---|---|---|
| CHC13, >99.5% | 3.1 | 5.7 | -0.028 |
| *Indicated alpha values are from Kamlet, M. J., Abboud, J.M., Abraham, M. H. and Taft, R. W.; J. Org. Chem., 1983, 48, 2877. | | | |

The Hansen solubility parameter, $\delta p$ iscalculated by using the group contribution method described in Barton, CRC Handbook of Solubility Par., 1st. Ed. 1983, page 85 - 87 and using Tables 13, 14.

Haze is measured by placing a hydrated test lens in borate buffered saline in a clear 20 x 40 x 10 mm glass cell at ambient temperature above a flat black background, illuminating from below with a fiber optic lamp (Titan Tool Supply Co. fiber optic light with 12.7mm (0.5") diameter light guide set at a power setting of 4-5.4) at an angle 66° normal to the lens cell, and capturing an image of the lens from above, normal to the lens cell with a video camera (DVC 1300C:19130 RGB camera with Navitar TV Zoom 7000 zoom lens) placed 14 mm above the lens platform. The background scatter is subtracted from the scatter of the lens by subtracting an image of a blank cell using EPIX XCAP V 1.0 software. The subtracted scattered light image is quantitatively analyzed, by integrating over the central 10 mm of the lens, and then comparing to a -1.00 diopter CSI Thin Lens®, which is arbitrarily set at a haze value of 100, with no lens set as a haze value of 0. Five lenses are analyzed and the results are averaged to generate a haze value as a percentage of the standard CSI lens.

The water content of contact lenses was measured as follows: Three sets of three lenses are allowed to sit in packing solution for 24 hours. Each lens is blotted with damp wipes and weighed. The lenses are dried at 60°C for four hours at a pressure of 1355Pa (0.4 inches Hg) or less. The dried lenses are weighed. The water content is calculated as follows:

$$\%\, water\ content = \frac{(wet\ weight - dry\ weight)}{\text{wet weight}}\ x\ 100$$

The average and standard deviation of the water content are calculated for the samples are reported.

Modulus is measured by using the crosshead of a constant rate of movement type tensile testing machine equipped with a load cell that is lowered to the initial gauge height. A suitable testing machine includes an Instron model 1122. A dog-bone shaped sample having a 13.3mm (0.522 inch) length, 7.0mm (0.276 inch) "ear" width and 5.4mm (0.213 inch) "neck" width is loaded into the grips and elongated at a constant rate of strain of 50.8mm (2 in)/min. until it breaks. The initial gauge length of the sample (Lo) and sample length at break (Lf) are measured. Twelve specimens of each composition are measured and the average is reported. Percent elongation is = [(Lf-Lo)/Lo]x 100. Tensile modulus is measured at the initial linear portion of the stress/strain curve.

The advancing contact angle was measured as follows. Four samples from each set were prepared by cutting out a center strip from the lens approximately 5 mm in width and equilibrated in packing solution. The wetting force between the lens surface and borate buffered saline is measured at 23°C using a Wilhelmy microbalance while the sample is being immersed into or pulled out of the saline. The following equation is used

$$F = 2\gamma p\cos\theta \qquad \text{or} \qquad \theta = \cos^{-1}(F/2\gamma p)$$

where F is the wetting force, $\gamma$ is the surface tension of the probe liquid, p is the perimeter of the sample at the meniscus and $\theta$ is the contact angle. The advancing contact angle is obtained from the portion of the wetting experiment where the sample is being immersed into the packing solution. Each sample was cycled four times and the results were averaged to obtain the advancing contact angles for the lens.

The Dk is measured as follows. Lenses are positioned on a polarographic oxygen sensor consisting of a 4 mm diameter gold cathode and a silver ring anode then covered on the upper side with a mesh support. The lens is exposed to an atmosphere of humidified 2.1% $O_2$. The oxygen that diffuses through the lens is measured by the sensor. Lenses are either stacked on top of each other to increase the thickness or a thicker lens is used. The L/Dk of 4 samples with significantly different thickness values are measured and plotted against the thickness. The inverse of the regressed slope is the Dk of the sample. The reference values are those measured on commercially available contact lenses using this method. Balafilcon A lenses available from Bausch & Lomb give a measurement of approx. 79 barrer. Etafilcon lenses give a measurement of 20 to 25 barrer. (1 barrer = $10^{-10}$ ($cm^3$ of gas x $cm^2$)/($cm^3$ of polymer x sec x cm Hg)).

The Examples below further describe this invention, but do not limit the invention. They are meant only to suggest a method of practicing the invention. Those knowledgeable in the field of contact lenses as well as other specialties may find other methods of practicing the invention. However, those methods are deemed to be within the scope of this invention.

Some of the materials that are employed in the Examples are identified as follows:

| | |
|---|---|
| DMA | N,N-dimethylacrylamide |
| HEMA | 2-hydroxyethyl methacrylate |
| mPDMS | 800-1000 MW ($M_n$) monomethacryloxypropyl terminated mono-n-butyl terminated polydimethylsiloxane |
| Norbloc | 2-(2'-hydroxy-5-methacrylyloxyethylphenyl)-2H-benzotriazole |
| PVP | poly(N-vinyl pyrrolidone) (K value 90) |
| SiGMA acetate | acetic acid, 2-hydroxy-3-[3-[1,3,3,3-tetramethyl-1-[(trimethylsilyl)oxy]disiloxanyl]propoxy]propyl ester |
| SiGMA diol | 2,3-dihydroxypropyloxypropyl-bis(trimethylsiloxy)-methylsilane |
| IPA | isopropyl alcohol |
| D3O | 3,7-dimethyl-3-octanol |
| 3M3P | 3-methyl-3-pentanol |
| 2M2P | 2-methyl-2-pentanol |
| TEGDMA | tetraethyleneglycol dimethacrylate |
| TRIS | 3-methacryloxypropyltris(trimethylsiloxy)silane |
| CGI 819 | bis(2,4,6-trimethylbenzoyl)-phenyl phosphine oxide |
| CGI 1850 | 1:1 (wgt) blend of 1-hydroxycyclohexyl phenyl ketone and bis(2,6-dimethoxybenzoyl)-2,4-4-trimethylpentyl phosphine oxide |

Example 1

The compounds listed in Table 1, below were screened for compatibility with mPDMS , DMA and PVP (K90) using the following procedure: mPDMS was added dropwise to a pre-weighed vial of a rapidly stirring solution of 1.67 g DMA, 0.33 g PVP and 2.0 g of the test diluent at room temperature until the resulting mix becomes hazy and does not become clear after stirring for several minutes. The mass of added mPDMS is determined and reported in Table 2.

The diluents were purchased from sources as follows:

Aldrich Chemicals: 1-decanol, 1-dodecanol, 1-octanol, 1-pentanol, 1-hexanol, decanoic acid, 2-hexanol, 2-octanol, 2-pentanol, 1-butanol, t-amyl alcohol, isopropanol, 2-(diisopropylamino)ethanol, tetrahydrofuran, acetone, diethylcarbonate, ethyl acetate, valeric acid, dipropyleneglycol methyl ether acetate, N,N-dimethylpropionamide, acetonitrile, 2-methyl-2,4-pentanediol, N-t-butylformamide, ethyl (S) lactate, N-ethylacetamide, solketal, N-methylpropionamide, dimethylsulfoxide, dodecane, isopropyl acetate, N-ethyl-2-methallylamine, and triethylamine.

Fluka: 3-methyl-3-pentanol, ethanol, chloroform and toluene.

Millennium Chemicals: D3O.

Fisher Scientific: methanol and acetic acid.

Acros: 1-ethoxy-2-propanol.

Gelest: 3-aminopropyltris(trimethylsiloxy) silane, tetraethoxysilane, mPDMS 1000, octamethylcyclotetrasiloxane and DMS-C15.

Jarchem: DMA. PVP K90 was purchased from ISP.

N-octylacetamide was prepared by reacting acetic anhydride with 1-octylamine in methanol at room temperature in the presence of $Na_2CO_3$ and was characterized by FTIR.

SiGMA acetate was prepared by reacting (3-glycidoxypropyl)bis(trimethylsiloxy)methylsilane with acetic acid, catalyzed by lithium acetate and was characterized by GC/MS. SiGMA diol was prepared by platinum catalyzed hydrosilylation of 2,3-dihyroxypropyl allyl ether with 1,1,1,3,5,5,5 hexamethyltrisiloxane and was characterized by GC/MS, FTIR and NMR. The minimum purities of test diluents, where known, are shown in Table 1.

Table 2

| Diluent | g mPDMS* | (functional group |
|---|---|---|
| 1-decanol, 99% | 2.95 | alcohol (1) |
| 1-dodecanol, 98% | 2.86 | alcohol (1) |

(continued)

| Diluent | g mPDMS* | (functional group |
|---|---|---|
| 1-octanol, 99% | 2.83 | alcohol (1) |
| 1-hexanol, 98% | 2.57 | alcohol (1) |
| 1-pentanol, >99% | 2.30 | alcohol (1) |
| decanoic acid, >99% | 2.28 | carboxylic acid |
| 2-octanol, 97% | 2.23 | alcohol (2) |
| 2-pentanol, 98% | 2.14 | alcohol (2) |
| 1-butanol, 99.8% | 2.17 | alcohol (1) |
| t-amyl alcohol, 99% | 2.02 | alcohol (3) |
| isopropanol, 99.5% | 1.85 | alcohol (2) |
| 3-methyl-3-pentanol, >98% | 1.80 | alcohol (3) |
| D3O, >97% | 1.72 | alcohol (3) |
| ethanol, anhydrous | 1.22 | alcohol (1) |
| SiGMA diol | 1.14 | alcohol (1 & 2) |
| 1-tert-butoxy-2-propanol, >98% | 1.04 | alcohol (2) & ether |
| 2-(diisopropylamino)ethanol, 99% | 1.02 | alcohol (1) & amine |
| SiGMA acetate | 1.00 | alcohol (2) and ester |
| 1-ethoxy-2-propanol, 90-95% | 0.67 | alcohol (2) & ether |
| chloroform, >99.5% | 0.57 | alkyl halide |
| Tetrahydrofuran, 99.9% | 0.33 | Ether |
| N-octylacetamide | 0.33 | Amide |
| toluene, 99% | 0.33 | Aromatic |
| acetone, 99.5% | 0.27 | Ketone |
| diethylcarbonate, 99% | 0.19 | Carbonate |
| ethyl acetate, 99.5% | 0.19 | Ester |
| Valeric acid, 99% | 0.18 | carboxylic acid |
| methanol, >99.9% | 0.17 | alcohol (1) |
| dipropyleneglycol methyl ether acetate, >99% | 0.15 | ether, ester |
| N,N-dimethylpropionamide | 0.15 | Amide |
| acetonitrile, >99% | 0.14 | Nitrile |
| 2-methyl-2,4-pentanediol | 0.12 | alcohol (2 & 3) |
| N-t-butylformamide, 98% | 0.12 | Amide |
| Acetic acid, glacial | 0.08 | Acid |
| ethyl (S) lactate, 98% | 0.06 | alcohol (2) & ester |
| N-ethylacetamide, 99% | 0.06 | Amide |
| 2-(methoxyethoxy)ethanol | 0.05 | alcohol (1) & ether |
| N-methylpyrrolidone | 0.05 | Amide |
| Solketal | 0.05 | alcohol (1) and ether |
| N-methylpropionamide, 98% | 0.05 | Amide |

(continued)

| Diluent | g mPDMS* | (functional group |
|---|---|---|
| Water | 0.03 | |
| dimethylsulfoxide, 99.9% | 0.01 | Sulfoxide |
| 3-aminopropyltris-(trimethylsiloxy) silane | 0.00 | amine & siloxane |
| Octamethylcyclotetrasiloxane | 0.00 | Siloxane |
| Dodecane | 0.00 | Alkane |
| DMS-C15 PDMS-PEG carbinol (Gelest) | 0.00 | alcohol, PEG, siloxane |
| isopropyl acetate, 99% | 0.00 | Ester |
| N-ethyl-2-methallylamine, 98% | 0.00 | amine, olefin |
| Tetraethoxysilane | 0.00 | Alkoxysilane |
| Triethylamine | 0.00 | Amine |
| *0.00 g indicates that the blend was inhomogenous before addition of any mPDMA. | | |

Diluents which are capable of forming a clear blend with about 0.6 or more grams of mPDMS in the above mixtures display desirable preliminary compatibility with the test components.

Examples 2-23

Some of the diluents from Example 1 were used to make contact lenses from the monomer mix shown in Table 3.

**Table 3**

| Component | level (wt) |
|---|---|
| DMA | 31% |
| PVP (K90) | 6% |
| mPDMS 1000 | 45% |
| HEMA | 14.75% |
| CGI-819 | 0.25% |
| TEGDMA | 1.5% |
| Norbloc | 1.5% |
| monomer/diluent ratio | 60/40 |

HEMA was purchased from Rohm. CGI-819 and CGI 1850 were purchased from CIBA Specialty Chemicals. TEGDMA was purchased from Esstech and Norbloc was purchased from Janssen.

The components were combined and mixed overnight at room temperature.

The monomer mix (75 microliter per cavity) was dispensed in a nitrogen glove box, into front curves made from Topas® copolymers of ethylene and norbornene obtained from Ticona Polymers. Polypropylene back curves were mated to the front curves, closing the mold. Lenses were cured by irradiating with Philips TL 20W/03T fluorescent bulbs at 45°C for about 30 minutes in $N_2$. The molds were opened and lenses were extracted into 70/30 (vol/vol) IPA/$H_2O$, washed with two fresh exchanges of this solution, and then placed into deionized water and observed for clarity. The results are shown in Table 4.

**Table 4**

| Ex# | Diluent | Blend clarity | Lens haze (%) |
|---|---|---|---|
| 2 | D3O | Clear | 18 |
| 3 | 1-decanol | Clear | 26 |

(continued)

| Ex# | Diluent | Blend clarity | Lens haze (%) |
|---|---|---|---|
| 4 | 1-octanol | Clear | 29 |
| 5 | 1-pentanol | Clear | 33 |
| 6 | 1-hexanol | Clear | 31 |
| 7 | 2-hexanol | Clear | 50 |
| 8 | 2-octanol | Clear | 46 |
| 9 | 1-dodecanol | Clear | 32 |
| 10 | 3-methyl-3-pentanol | Clear | 16 |
| 11 | t-amyl alcohol | Clear | 13 |
| 12 | t-butanol | Clear | 13 |
| 13 | 2-butanol | Clear | 58 |
| 14 | 1-butanol | Clear | 31 |
| 15 | 2-methyl-2-pentanol | Clear | 13 |
| 16 | 2-propanol | Clear | 29* |
| 17 | 1-propanol | Clear | 49 |
| 18 | Ethanol | Clear | 64* |
| 19 | 2-ethyl-1-butanol | Clear | 22 |
| 20 | SiGMA acetate | Clear | Opaque |
| 21 | Decanoic acid | Clear | Opaque |
| 22 | 1-t-butoxy-2-propanol | Opaque | - |
| 23 | 1-ethoxy-2-propanol | Opaque | - |
| *Lenses were misshapen | | | |

The mechanical properties of lenses from examples 5, 6 and 14 were measured and are reported in Table 5. The results show that, in three isomeric hexanols, the modulus of the lenses made with a secondary alcohol is reduced as compared to those made with primary or tertiary alcohols. While not wishing to be bound by theory, it is believed that hydrogen atom abstraction from secondary alcohol diluents may effect cure in a manner that may reduce the modulus as well as the clarity (see Table 4) of the resulting lenses.

**Table 5**

| Ex# | Alcohol type | Diluent | Modulus (psi) | Elongation (%) |
|---|---|---|---|---|
| 6 | Primary | 1-hexanol | 75 ± 7 | 251 ± 72 |
| 7 | Secondary | 2-hexanol | 64 ± 4 | 200 ± 71 |
| 15 | Tertiary | 2-methyl-2-pentanol | 77 ± 8 | 209 ± 104 |

Examples 24

Lenses were made from the components shown in Table 6, below. The components were mixed overnight at room temperature to give a clear blend. The reactive mixture was charged in a nitrogen box, into lens molds comprising front curves made from Topas® copolymers of ethylene and norbornene obtained from Ticona Polymers and polypropylene back curves. Lenses were cured with 1.3 $mW/cm^2$ from Philips TL 20W/03T fluorescent bulbs at 60°C for about 30 minutes in $N_2$. The molds were opened and lenses were extracted into IPA, and soaked in IPA at ambient temperature for about one hour to remove residual diluent and monomers, stepped down into an approximately 50:50 solution of IPA and water, and then placed into deionized water and observed for clarity. The lenses were optically clear, soft and

wettable. Lens properties are shown in Table 8, below.

**Table 6**

| | |
|---|---|
| MPDMS | 46 |
| DMA | 35 |
| HEMA | 9.5 |
| TEGDMA | 1.5 |
| PVP K90 | 7 |
| CGI 1850 | 1 |
| Diluent | D3O |
| Diluent % | 36.0 |

Example 25

Lenses were made from the components shown in Table 7, below. The components were mixed overnight at room temperature to give a clear blend.

**Table 7**

| | |
|---|---|
| MPDMS | 45.0 |
| DMA | 31.0 |
| HEMA | 15.25 |
| EGDMA | 1.0 |
| Norbloc | 1.5 |
| PVP K90 | 6.0 |
| CGI 819 | 0.25 |
| Diluent | t-amyl alcohol |
| Diluent % | 40.0 |
| Cure Temp. | 60-65°C |

The reactive mixture was charged to a lens mold comprising front curves made from Topas® copolymers of ethylene and norbornene obtained from Ticona Polymers in a nitrogen box, and with polypropylene back curves. Lenses were cured irradiating with 1.3 mW/cm$^2$ from Philips TL 20W/03T fluorescent bulbs at the temperature indicated for about 15 minutes in $N_2$. The molds were opened and lenses were extracted into a 70/30 blend (v/v) of IPA/water, changing this mixture twice with fresh 70/30 IPA/water, and then placed into deionized water. The results are shown in Table 8.

**Table 8**

| Property | Ex. 24 | Ex. 25 |
|---|---|---|
| % EWC | 56.2 ± 0.2 | 43.7 ± 0.3 |
| Dk (barrers) | 71 | 63 |
| Modulus (psi) | 60 ± 5.9 | 118.4 ± 7.3 |
| Elongation (%) | 144 ± 42 | 155 ± 47 |
| DCA | 63 ± 7 | 46 ± 14 |
| Clarity | Clear | 8 ± 1 |

Examples 26-27

Fluoroether-siloxane-methacrylate macromer was prepared following the procedure of Example B-5 in U.S. Patent 5,760,100. The blend shown in Table 9 was prepared by combining the listed components and mixing overnight at room temperature. Lenses were made by filling TOPAS mold front curves in a nitrogen atmosphere with 75 microliters of the monomer mix, closing the molds with a polypropylene beck curve and irradiating for 30 minutes with Philips TL 20W/09N fluorescent bulbs at room temperature. The molds were separated and the lenses were released into a solution of 70/30 (v/v) IPA and water. The lenses were leached in this solution with two exchanges for fresh solution, leaching at least 30 minutes per cycle, then placed into borate-buffered saline solution. The advancing DCA (dynamic contact angle) of the lenses was determined and the results are shown in Table 9, below.

Example 26 was repeated except that PVP and HEMA were added, and the amount of the TRIS and DMA decreased to allow for the additional components. The amounts of the components are shown in Table 9, below. Lenses were made according to Example 26, the advancing DCA was determined and the results are shown in Table 9, below.

Table 9

| | Example 27 | Example 26 |
|---|---|---|
| Macromer | 50 parts (wgt) | 50 parts |
| TRIS | 25 parts | 20 parts |
| DMA | 17 parts | 30 parts |
| PVP (K 90) | 3 parts | 0 parts |
| HEMA | 5 parts | 0 parts |
| Darocur 1173 | 0.58 parts | 0.58 parts |
| Diluent | 67 parts (D3O) | 22 parts (ethanol) |
| Blend | Clear | Clear |
| Lens | clear and flexible | clear and flexible |
| Advancing DCA | 57 ± 12° | 128 ± 10° |

Thus, by proper diluent selection, hydrogels comprising silicone containing monomers may be formed into wettable, ophthalmic devices, without any surface treatment process.

## Claims

1. A composition comprising
   at least one silicone containing component,
   at least one hydrophilic component,
   a high molecular weight hydrophilic polymer, wherein the high molecular weight hydrophilic polymer has a K-value of greater than 46, and
   a diluent having an alpha value of between 0.05 and 1 and a Hansen solubility parameter, δp of less than 10, wherein said composition forms a clear blend at a selected reaction temperature wherein the reaction temperature is up to 75 °C, wherein the K-value, alpha value and Hansen solubility parameter are measured using the methods described in the description,
   **characterized in that** said composition does not include a silicone containing compatibilizing component, which is a reaction component that contains at least one silicone and at least one hydroxyl group.

2. The composition of claim 1 wherein said reaction temperature is 40 °C.

3. The composition of claim 1 wherein said alpha value is between 0.1 and 0.9.

4. The composition of claim 1 wherein said hydrophilic component and said silicone containing component are polymerizable and said composition forms a clear article when polymerized at said reaction temperature.

5. The composition of claim 1 wherein said diluent is selected from the group consisting of alcohols having at least three carbon atoms.

6. The composition of claim 1 wherein said diluent is selected from the group consisting of alcohols having at least four carbon atoms.

7. The composition of claim 1 wherein said diluent is selected from the group consisting of alcohols having at least six carbon atoms.

8. The composition of claim 1 wherein said $\delta p$ of less than 6.

9. The composition of claim 1 wherein said diluent is selected from the group consisting of 1-ethoxy-2-propanol, diisopropylaminoethanol, isopropanol, 3,7-dimethyl-3-octanol, 1-decanol, 1-dodecanol, 1-octanol, 1-pentanol, 2-pentanol, 1-hexanol, 2-hexanol, 2-octanol, 3-methyl-3-pentanol, tert-amyl alcohol, *tert*-butanol, 2-butanol, 1-butanol, 2-methyl-2-pentanol, 2-propanol, 1-propanol, ethanol, 2-ethyl-1-butanol, SiGMA acetate, 1-*tert*-butoxy-2-propanol, 3,3-dimethyl-2-butanol, *tert*-butoxyethanol, 2-octyl-1-dodecanol, decanoic acid, octanoic acid, dodecanoic acid, 2-(diisopropylamino)ethanol and mixtures thereof.

10. The composition of claim 1 wherein said diluent is selected from the group consisting of 3,7-dimethyl-3-octanol, 1-dodecanol, 1-decanol, 1-octanol, 1-pentanol, 1-hexanol, 2-hexanol, 2-octanol, 3-methyl-3-pentanol, 2-pentanol, t-amyl alcohol, *tert*-butanol, 2-butanol, 1-butanol, 2-methyl-2-pentanol, 2-ethyl-1-butanol, ethanol, 3,3-dimethyl-2-butanol, 2-octyl-1-dodecanol, decanoic acid, octanoic acid, dodecanoic acid and mixtures thereof.

11. The composition of claim 1 wherein said diluent is selected from the group consisting of 3,7-dimethyl-3-octanol, 1-dodecanol, 1-decanol, 1-octanol, 1-pentanol, 1-hexanol, 2-hexanol, 2-octanol, 1-dodecanol, 3-methyl-3-pentanol, 1-pentanol, 2-pentanol, t-amyl alcohol, *tert*-butanol, 2-butanol, 1-butanol, 2-methyl-2-pentanol, 2-ethyl-1-butanol, 3,3-dimethyl-2-butanol, 2-octyl-1-dodecanol and mixtures thereof.

12. The composition of claim 1 wherein said high molecular weight hydrophilic polymer has a molecular weight greater than 150,000 Daltons.

13. The composition of claim 1 wherein said high molecular weight hydrophilic polymer has a molecular weight between 150,000 to 2,000,000 Daltons.

14. The composition of claim 1 wherein said high molecular weight hydrophilic polymer has a molecular weight between 500,000 to 1,500,000 Daltons.

15. The composition of claim 1 wherein said composition comprises 1 to 15 weight percent high molecular weight hydrophilic polymer.

16. The composition of claim 1 wherein said composition comprises 3 to 12 percent high molecular weight hydrophilic polymer.

17. The composition of claim 1 wherein said high molecular weight hydrophilic polymer's backbone is selected from the group consisting of a cyclic amide and a cyclic imide.

18. The composition of claim 1 wherein said high molecular weight hydrophilic polymers is selected from the group consisting of poly-N-vinyl pyrrolidone, poly-N-vinyl-2-piperidone, poly-N-vinyl-2-caprolactam, poly-N-vinyl-3-methyl-2-caprolactam, poly-N-vinyl-3-methyl-2-piperidone, poly-N-vinyl-4-methyl-2-piperidone, poly-N-vinyl-4-methyl-2-caprolactam, poly-N-vinyl-3-ethyl-2-pyrrolidone, and poly-N-vinyl-4,5-dimethyl-2-pyrrolidone, polyvinylimidazole, poly-N-N-dimethylacrylamide, polyvinyl alcohol, polyacrylic acid, polyethylene oxide, poly 2 ethyl oxazoline, heparin polysaccharides, polysaccharides, mixtures and copolymers (including block or random, branched, multichain, comb-shaped or star shaped) thereof.

19. The composition of claim 1 wherein said high molecular weight hydrophilic polymer comprises poly-N-vinylpyrrolidone.

20. The composition of claim 1 wherein a ratio of moles HBD: moles HBA (HMWHP) is $\geq 0.8$ for the composition.

**21.** The composition of claim 1 wherein a ratio of moles HBD present to moles HBD preferred is ≥ 0.6 for the composition.

**22.** The composition of claim 1 wherein a ratio of HTS is > 0.14 for the composition.

**23.** The composition of claim 1, wherein the hydrophilic component is a hydroxyl containing component.

**24.** The composition of claim 23 wherein said hydroxyl containing component that comprises at least one polymerizable double bond and at least one hydrophilic functional group.

**25.** The composition of claim 24 wherein said polymerizable double bond is selected from the group consisting of acrylic, methacrylic, acrylamido, methacrylamido, fumaric, maleic, styryl, isopropenylphenyl, O-vinylcarbonate, O-vinylcarbamate, allylic, O-vinylacetyl and N-vinyllactam and N-vinylamido double bonds.

**26.** The composition of claim 24 wherein said hydroxyl containing monomer is selected from the group consisting of 2-hydroxyethyl methacrylate, 2-hydroxyethyl acrylate, 2-hydroxyethyl methacrylamide, 2-hydroxyethyl acrylamide, 2-hydroxyethyl vinyl carbamate, 2-hydroxyethyl vinyl carbonate, 2-hydroxypropyl methacrylate, hydroxyhexyl methacrylate, hydroxyoctyl methacrylate and mixtures thereof.

**27.** The composition of claim 24 wherein said hydroxyl containing monomer comprises 2-hydroxyethyl methacrylate.

**28.** The composition of claim 24 wherein said silicone containing component comprises a fluoroether-siloxane-methacrylate macromer.

**29.** The composition of claim 24 or 28 wherein said hydroxyl containing monomer comprises 2-hydroxyethyl methacrylate and said high molecular weight hydrophilic polymer comprises poly-N-vinylpyrrolidone.

**30.** The composition of claim 24 wherein said silicone containing component comprises monomethacryloxypropyl terminated mono-n-butyl terminated polydimethylsiloxane.

**31.** The composition of claim 30 wherein said hydroxyl containing monomer comprises 2-hydroxyethyl methacrylate and said high molecular weight hydrophilic polymer comprises poly-N-vinylpyrrolidone.

**32.** The composition of claim 1, wherein the composition is capable of forming a clear blend at ambient temperature and at a weight ratio of said diluent: said hydrophilic component: said high molecular weight hydrophilic polymer : said silicone containing component of 2 : 1.6 : 0.3 : at least 1.

**33.** The composition of claim 29 wherein said hydrophilic component comprises N,N-dimethylacrylamide, said silicone-containing component comprises monomethacryloxypropyl terminated mono-n-butyl terminated polydimethylsiloxane and said high molecular weight hydrophilic polymer comprises poly-N-vinylpyrrolidone.

**34.** An ophthalmic device comprising a cured compound, wherein the compound in precure form comprises a composition according to claim 1,
wherein the device has a contact angle of less than 80°.

**35.** The ophthalmic device of claim 34, wherein the hydrophilic component is a hydroxyl containing component.

**36.** A method of making a clear and wettable ophthalmic device comprising

combining at least one silicone containing component, at least one hydrophilic component, at least one high molecular weight hydrophilic polymer, wherein the high molecular weight hydrophilic polymer has a K-value of greater than 46, and at least one diluent having an alpha value of between 0.05 and 1 and a Hansen solubility parameter, $\delta p$, of less than 10,
Placing the combination in a mold,

Curing the combination,
Extracting the combination from the mold, and
Removing substantially all of the diluent from the combination, wherein the device has a contact angle of less than 80°, wherein the combination does not include a silicone containing compatibilizing component,

which is a reaction component that contains at least one silicone and at least one hydroxyl group, and wherein the K-value, alpha value and Hansen solubility parameter are measured using the methods described in the description.

**37.** The method of claim 36 wherein the hydrophilic component is a hydroxyl containing component.

**38.** The composition of claim 1, comprising

monomethacryloxypropyl terminated mono-n-butyl terminated polydimethylsiloxane; N, N-dimethylacrylamide;
2-hydroxyethyl methacrylate;
tetraethyleneglycol dimethacrylate;
poly(N-vinyl pyrrolidone) (K value 90);
bis(2,4,6-trimethylbenzoyl)-phenyl phosphine oxide; and 3,7-dimethyl-3-octanol.

**39.** The composition of claim 1, comprising

monomethacryloxypropyl terminated mono-n-butyl terminated polydimethylsiloxane;
N,N-dimethylacrylamide;
2-hydroxyethyl methacrylate;
ethylene glycol dimethacrylate;
2-(2'-hydroxy-5-methacrylyloxyethylphenyl)-2H-benzotriazole; poly (N-vinyl pyrrolidone) (K value 90);
bis(2,4,6-trimethylbenzoyl)-phenyl phosphine oxide; and
t-amyl alcohol.

**Patentansprüche**

**1.** Zusammensetzung, umfassend
mindestens eine silikonhaltige Komponente, mindestens eine hydrophile Komponente,
ein hochmolekulares hydrophiles Polymer, wobei das hochmolekulare hydrophile Polymer einen K-Wert von mehr als 46 aufweist, und
ein Verdünnungsmittel mit einem Alpha-Wert zwischen 0,05 und 1 und einem Hansen-Löslichkeitsparameter $\delta p$ von weniger als 10, wobei die Zusammensetzung bei einer gewählten Reaktionstemperatur eine klare Mischung bildet, wobei die Reaktionstemperatur bis zu 75 °C beträgt,
wobei der K-Wert, der Alpha-Wert und der Hansen-Löslichkeitsparameter unter Verwendung der in der Beschreibung beschriebenen Methoden gemessen werden,
**dadurch gekennzeichnet, dass** die Zusammensetzung keine silikonhaltige Kompatibilisierungskomponente umfasst, bei der es sich um eine Reaktionskomponente handelt, die mindestens ein Silikon und mindestens eine Hydroxylgruppe umfasst.

**2.** Zusammensetzung nach Anspruch 1, wobei die Reaktionstemperatur 40 °C beträgt.

**3.** Zusammensetzung nach Anspruch 1, wobei der Alpha-Wert zwischen 0,1 und 0,9 liegt.

**4.** Zusammensetzung nach Anspruch 1, wobei die hydrophile Komponente und die silikonhaltige Komponente polymerisierbar sind und die Zusammensetzung bei Polymerisation bei der Reaktionstemperatur einen klaren Artikel bildet.

**5.** Zusammensetzung nach Anspruch 1, wobei das Verdünnungsmittel aus der Gruppe von Alkoholen mit mindestens drei Kohlenstoffatomen ausgewählt ist.

**6.** Zusammensetzung nach Anspruch 1, wobei das Verdünnungsmittel aus der Gruppe von Alkoholen mit mindestens vier Kohlenstoffatomen ausgewählt ist.

**7.** Zusammensetzung nach Anspruch 1, wobei das Verdünnungsmittel aus der Gruppe von Alkoholen mit mindestens sechs Kohlenstoffatomen ausgewählt ist.

**8.** Zusammensetzung nach Anspruch 1, wobei der $\delta p$ weniger als 6 beträgt.

9. Zusammensetzung nach Anspruch 1, wobei das Verdünnungsmittel aus der Gruppe bestehend aus 1-Ethoxy-2-propanol, Diisopropylaminoethanol, Isopropanol, 3,7-Dimethyl-3-octanol, 1-Decanol, 1-Dodecanol, 1-Octanol, 1-Pentanol, 2-Pentanol, 1-Hexanol, 2-Hexanol, 2-Octanol, 3-Methyl-3-pentanol, tert-Amylalkohol, tert-Butanol, 2-Butanol, 1-Butanol, 2-Methyl-2-pentanol, 2-Propanol, 1-Propanol, Ethanol, 2-Ethyl-1-butanol, SiGMA-Acetat, 1-*tert*-Butoxy-2-propanol, 3,3-Dimethyl-2-butanol, tert-Butoxyethanol, 2-Octyl-1-dodecanol, Decansäure, Octansäure, Dodecansäure, 2-(Diisopropylamino)ethanol und Mischungen davon ausgewählt ist.

10. Zusammensetzung nach Anspruch 1, wobei das Verdünnungsmittel aus der Gruppe bestehend aus 3,7-Dimethyl-3-octanol, 1-Dodecanol, 1-Decanol, 1-Octanol, 1-Pentanol, 1-Hexanol, 2-Hexanol, 2-Octanol, 3-Methyl-3-pentanol, 2-Pentanol, t-Amylalkohol, *tert*-Butanol, 2-Butanol, 1-Butanol, 2-Methyl-2-pentanol, 2-Ethyl-1-butanol, Ethanol, 3,3-Dimethyl-2-butanol, 2-Octyl-1-dodecanol, Decansäure, Octansäure, Dodecansäure und Mischungen davon ausgewählt ist.

11. Zusammensetzung nach Anspruch 1, wobei das Verdünnungsmittel aus der Gruppe bestehend aus 3,7-Dimethyl-3-octanol, 1-Dodecanol, 1-Decanol, 1-Octanol, 1-Pentanol, 1-Hexanol, 2-Hexanol, 2-Octanol, 1-Dodecanol, 3-Methyl-3-pentanol, 1-Pentanol, 2-Pentanol, t-Amylalkohol, tert-Butanol, 2-Butanol, 1-Butanol, 2-Methyl-2-pentanol, 2-Ethyl-1-butanol, 3,3-Dimethyl-2-butanol, 2-Octyl-1-dodecanol und Mischungen davon ausgewählt ist.

12. Zusammensetzung nach Anspruch 1, wobei das hochmolekulare hydrophile Polymer ein Molekulargewicht von mehr als 150.000 Dalton aufweist.

13. Zusammensetzung nach Anspruch 1, wobei das hochmolekulare hydrophile Polymer ein Molekulargewicht zwischen 150.000 bis 2.000.000 Dalton aufweist.

14. Zusammensetzung nach Anspruch 1, wobei das hochmolekulare hydrophile Polymer ein Molekulargewicht zwischen 500.000 bis 1.500.000 Dalton aufweist.

15. Zusammensetzung nach Anspruch 1, wobei die Zusammensetzung 1 bis 15 Gewichtsprozent hochmolekulares hydrophiles Polymer umfasst.

16. Zusammensetzung nach Anspruch 1, wobei die Zusammensetzung 3 bis 12 Gewichtsprozent hochmolekulares hydrophiles Polymer umfasst.

17. Zusammensetzung nach Anspruch 1, wobei die Hauptkette des hochmolekularen hydrophilen Polymers aus der Gruppe bestehend aus einem cyclischen Amid und einem cyclischen Imid ausgewählt ist.

18. Zusammensetzung nach Anspruch 1, wobei das hochmolekulare hydrophile Polymer aus der Gruppe bestehend aus Poly-N-vinylpyrrolidon, Poly-N-vinyl-2-piperidon, Poly-N-vinyl-2-caprolactam, Poly-N-vinyl-3-methyl-2-caprolactam, Poly-N-vinyl-3-methyl-2-piperidon, Poly-N-vinyl-4-methyl-2-piperidon, Poly-N-vinyl-4-methyl-2-caprolactam, Poly-N-vinyl-3-ethyl-2-pyrrolidon und Poly-N-vinyl-4,5-dimethyl-2-pyrrolidon, Polyvinylimidazol, Poly-N,N-dimethylacrylamid, Polyvinylalkohol, Polyacrylsäure, Polyethylenoxid, Poly-2-ethyloxazolin, Heparin-Polysacchariden, Polysacchariden, Mischungen und Copolymeren (einschließlich blockartig oder statistisch aufgebauter, verzweigter, mehrkettiger, kammförmiger oder sternförmiger Copolymere) davon ausgewählt ist.

19. Zusammensetzung nach Anspruch 1, wobei das hochmolekulare hydrophile Polymer Poly-N-vinylpyrrolidon umfasst.

20. Zusammensetzung nach Anspruch 1, wobei ein Verhältnis von Molen HBD:Molen HBA (HMWHP) ≥ 0,8 für die Zusammensetzung ist.

21. Zusammensetzung nach Anspruch 1, wobei ein Verhältnis von vorliegenden Molen HBD zu bevorzugten Molen HBD ≥ 0,6 für die Zusammensetzung ist.

22. Zusammensetzung nach Anspruch 1, wobei ein Verhältnis von HTS > 0,14 für die Zusammensetzung ist.

23. Zusammensetzung nach Anspruch 1, wobei es sich bei der hydrophilen Komponente um eine hydroxylgruppenhaltige Komponente handelt.

**24.** Zusammensetzung nach Anspruch 23, wobei die hydroxylgruppenhaltige Komponente mindestens eine polymerisierbare Doppelbindung und mindestens eine hydrophile funktionelle Gruppe umfasst.

**25.** Zusammensetzung nach Anspruch 24, wobei die polymerisierbare Doppelbindung aus der Gruppe bestehend aus Acryl-, Methacryl-, Acrylamido-, Methacrylamido-, Fumarsäure-, Maleinsäure-, Styrol-, Isopropenylphenyl-, O-Vinylcarbonat-, O-Vinylcarbamat-, Allyl-, O-Vinylacetyl- und N-Vinyllactam- und N-Vinylamido-Doppelbindungen ausgewählt ist.

**26.** Zusammensetzung nach Anspruch 24, wobei das hydroxylgruppenhaltige Monomer aus der Gruppe bestehend aus 2-Hydroxyethylmethacrylat, 2-Hydroxyethylacrylat, 2-Hydroxyethylmethacrylamid, 2-Hydroxyethylacrylamid, 2-Hydroxyethylvinylcarbamat, 2-Hydroxyethylvinylcarbonat, 2-Hydroxypropylmethacrylat, Hydroxyhexylmethacrylat, Hydroxyoctylmethacrylat und Mischungen davon ausgewählt ist.

**27.** Zusammensetzung nach Anspruch 24, wobei das hydroxylgruppenhaltige Monomer 2-Hydroxyethylmethacrylat umfasst.

**28.** Zusammensetzung nach Anspruch 24, wobei die silikonhaltige Komponente ein Fluorether-Siloxan-Methacrylat-Makromer umfasst.

**29.** Zusammensetzung nach Anspruch 24 oder 28, wobei das hydroxylgruppenhaltige Monomer 2-Hydroxyethylmethacrylat umfasst und das hochmolekulare hydrophile Polymer Poly-N-vinylpyrrolidon umfasst.

**30.** Zusammensetzung nach Anspruch 24, wobei die silikonhaltige Komponente monomethacryloxypropylterminiertes mono-n-butylterminiertes Polydimethylsiloxan umfasst.

**31.** Zusammensetzung nach Anspruch 30, wobei das hydroxylgruppenhaltige Monomer 2-Hydroxyethylmethacrylat umfasst und das hochmolekulare hydrophile Polymer Poly-N-vinylpyrrolidon umfasst.

**32.** Zusammensetzung nach Anspruch 1, wobei die Zusammensetzung dazu in der Lage ist, bei Umgebungstemperatur und bei einem Gewichtsverhältnis von Verdünnungsmittel : hydrophiler Komponente : hochmolekularem hydrophilem Polymer : Silikon von 2 : 1,6 : 0,3 : mindestens 1 eine klare Mischung zu bilden.

**33.** Zusammensetzung nach Anspruch 29, wobei die hydrophile Komponente N,N-Dimethylacrylamid umfasst, die silikonhaltige Komponente monomethacryloxypropylterminiertes mono-n-butylterminiertes Polydimethylsiloxan umfasst und das hochmolekulare hydrophile Polymer Poly-N-vinylpyrrolidon umfasst.

**34.** Ophthalmische Vorrichtung, umfassend eine gehärtete Verbindung, wobei die Verbindung vor der Härtung eine Zusammensetzung nach Anspruch 1 umfasst, wobei die Vorrichtung einen Kontaktwinkel von weniger als 80° aufweist.

**35.** Ophthalmische Vorrichtung nach Anspruch 34, wobei es sich bei der hydrophilen Komponente um eine hydroxylgruppenhaltige Komponente handelt.

**36.** Verfahren zur Herstellung einer klaren und benetzbaren ophthalmischen Vorrichtung, das Folgendes umfasst:

Kombinieren mindestens einer silikonhaltigen Komponente, mindestens einer hydrophilen Komponente, mindestens eines hochmolekularen hydrophilen Polymers, wobei das hochmolekulare hydrophile Polymer einen K-Wert von mehr als 46 aufweist, und mindestens eines Verdünnungsmittel mit einem Alpha-Wert zwischen 0,05 und 1 und einem Hansen-Löslichkeitsparameter $\delta p$ von weniger als 10,
Einbringen der Kombination in eine Form,
Härten der Kombination,
Entnehmen der Kombination aus der Form und
weitgehend vollständige Entfernung des Verdünnungsmittels aus der Kombination, wobei die Vorrichtung einen Kontaktwinkel von weniger als 80° aufweist, wobei die Kombination keine silikonhaltige Kompatibilisierungskomponente umfasst, bei der es sich um eine Reaktionskomponente handelt, die mindestens ein Silikon und mindestens eine Hydroxylgruppe umfasst,
und wobei der K-Wert, der Alpha-Wert und der Hansen-Löslichkeitsparameter unter Verwendung der in der Beschreibung beschriebenen Methoden gemessen werden.

**37.** Verfahren nach Anspruch 36, wobei es sich bei der hydrophilen Komponente um eine hydroxylgruppenhaltige Komponente handelt.

**38.** Zusammensetzung nach Anspruch 1, umfassend monomethacryloxypropylterminiertes mono-n-butylterminiertes Polydimethylsiloxan;

N,N-Dimethylacrylamid;
2-Hydroxyethylmethacrylat;
Tetraethylenglykoldimethacrylat;
Poly(N-vinylpyrrolidon) (K-Wert 90);
Bis(2,4,6-trimethylbenzoyl)phenylphosphinoxid; und
3,7-Dimethyl-3-octanol.

**39.** Zusammensetzung nach Anspruch 1, umfassend
monomethacryloxypropylterminiertes mono-n-butylterminiertes Polydimethylsiloxan;
N,N-Dimethylacrylamid;
2-Hydroxyethylmethacrylat;
Ethylenglykoldimethacrylat;
2-(2'-Hydroxy-5-methacrylyloxyethylphenyl)-2H-benzotriazol;
Poly(N-vinylpyrrolidon) (K-Wert 90);
Bis(2,4,6-trimethylbenzoyl)phenylphosphinoxid; und t-Amylalkohol.

## Revendications

**1.** Composition comprenant :

au moins un constituant contenant du silicone,
au moins un constituant hydrophile,
un polymère hydrophile à haute masse moléculaire, le polymère hydrophile à haute masse moléculaire ayant une valeur K supérieure à 46, et
un diluant ayant une valeur alpha de 0,05 à 1 et un paramètre de solubilité de Hansen, $\delta p$, inférieur à 10, ladite composition formant un mélange transparent à une température de réaction sélectionnée, la température de réaction étant de jusqu'à 75 °C,
la valeur K, la valeur alpha et le paramètre de solubilité de Hansen étant mesurés par les méthodes décrites dans la description,
**caractérisée en ce que** ladite composition ne comprend pas de constituant de compatibilisation contenant du silicone, lequel est un constituant de réaction qui contient au moins un groupe silicone et au moins un groupe hydroxyle.

**2.** Composition selon la revendication 1, dans laquelle ladite température de réaction est de 40 °C.

**3.** Composition selon la revendication 1, dans laquelle ladite valeur alpha est de 0,1 à 0,9.

**4.** Composition selon la revendication 1, dans laquelle ledit constituant hydrophile et ledit constituant contenant du silicone sont polymérisables et ladite composition forme un article transparent lorsqu'elle est polymérisée à ladite température de réaction.

**5.** Composition selon la revendication 1, dans laquelle ledit diluant est sélectionné dans le groupe constitué d'alcools comportant au moins trois atomes de carbone.

**6.** Composition selon la revendication 1, dans laquelle ledit diluant est sélectionné dans le groupe constitué d'alcools comportant au moins quatre atomes de carbone.

**7.** Composition selon la revendication 1, dans laquelle ledit diluant est sélectionné dans le groupe constitué d'alcools comportant au moins six atomes de carbone.

**8.** Composition selon la revendication 1, dans laquelle $\delta p$ est inférieur à 6.

**9.** Composition selon la revendication 1, dans laquelle ledit diluant est sélectionné dans le groupe constitué du 1-éthoxy-2-propanol, du diisopropylaminoéthanol, de l'isopropanol, du 3,7-diméthyl-3-octanol, du 1-décanol, du 1-dodécanol, du 1-octanol, du 1-pentanol, du 2-pentanol, du 1-hexanol, du 2-hexanol, du 2-octanol, du 3-méthyl-3-pentanol, de l'alcool *tert*-amylique, du *tert*-butanol, du 2-butanol, du 1-butanol, du 2-méthyl-2-pentanol, du 2-propanol, du 1-propanol, de l'éthanol, du 2-éthyl-1-butanol, de l'acétate SiGMA, du 1-*tert*-butoxy-2-propanol, du 3,3-diméthyl-2-butanol, du *tert*-butoxyéthanol, du 2-octyl-1-dodécanol, de l'acide décanoique, de l'acide octanoïque, de l'acide dodécanoïque, du 2-(diisopropylamino)éthanol, et de mélanges de ceux-ci.

**10.** Composition selon la revendication 1, dans laquelle ledit diluant est sélectionné dans le groupe constitué du 3,7-diméthyl-3-octanol, du 1-dodécanol, du 1-décanol, du 1-octanol, du 1-pentanol, du 1-hexanol, du 2-hexanol, du 2-octanol, du 3-méthyl-3-pentanol, du 2-pentanol, de l'alcool t-amylique, du tert-butanol, du 2-butanol, du 1-butanol, du 2-méthyl-2-pentanol, du 2-éthyl-1-butanol, de l'éthanol, du 3,3-diméthyl-2-butanol, du 2-octyl-1-dodécanol, de l'acide décanoique, de l'acide octanoïque, de l'acide dodécanoïque, et de mélanges de ceux-ci.

**11.** Composition selon la revendication 1, dans laquelle ledit diluant est sélectionné dans le groupe constitué du 3,7-diméthyl-3-octanol, du 1-dodécanol, du 1-décanol, du 1-octanol, du 1-pentanol, du 1-hexanol, du 2-hexanol, du 2-octanol, du 1-dodécanol, du 3-méthyl-3-pentanol, du 1-pentanol, du 2-pentanol, de l'alcool t-amylique, du tert-butanol, du 2-butanol, du 1-butanol, du 2-méthyl-2-pentanol, du 2-éthyl-1-butanol, du 3,3-diméthyl-2-butanol, du 2-octyl-1-dodécanol, et de mélanges de ceux-ci.

**12.** Composition selon la revendication 1, dans laquelle ledit polymère hydrophile à haute masse moléculaire a une masse moléculaire supérieure à 150 000 daltons.

**13.** Composition selon la revendication 1, dans laquelle ledit polymère hydrophile à haute masse moléculaire a une masse moléculaire de 150 000 à 2 000 000 daltons.

**14.** Composition selon la revendication 1, dans laquelle ledit polymère hydrophile à haute masse moléculaire a une masse moléculaire de 500 000 à 1 500 000 daltons.

**15.** Composition selon la revendication 1, ladite composition comprenant 1 à 15 % en poids de polymère hydrophile à haute masse moléculaire.

**16.** Composition selon la revendication 1, ladite composition comprenant 3 à 12 % de polymère hydrophile à haute masse moléculaire.

**17.** Composition selon la revendication 1, dans laquelle le squelette dudit polymère hydrophile à haute masse moléculaire est sélectionné dans le groupe constitué d'un amide cyclique et d'un imide cyclique.

**18.** Composition selon la revendication 1, dans laquelle ledit polymère hydrophile à haute masse moléculaire est sélectionné dans le groupe constitué de la poly-N-vinylpyrrolidone, de la poly-N-vinyl-2-pipéridone, du poly-N-vinyl-2-caprolactame, du poly-N-vinyl-3-méthyl-2-caprolactame, de la poly-N-vinyl-3-méthyl-2-pipéridone, de la poly-N-vinyl-4-méthyl-2-pipéridone, du poly-N-vinyl-4-méthyl-2-caprolactame, de la poly-N-vinyl-3-éthyl-2-pyrrolidone, et de la poly-N-vinyl-4,5-diméthyl-2-pyrrolidone, du polyvinylimidazole, du poly-N-N-diméthylacrylamide, de l'alcool polyvinylique, de l'acide polyacrylique, de l'oxyde de polyéthylène, de la poly-2-éthyloxazoline, de polysaccharides d'héparine, de polysaccharides, et de mélanges et de copolymères (y compris à blocs ou aléatoires, ramifiés, multicaténaires, en peigne ou en étoile) de ceux-ci.

**19.** Composition selon la revendication 1, dans laquelle ledit polymère hydrophile à haute masse moléculaire comprend de la poly-N-vinylpyrrolidone.

**20.** Composition selon la revendication 1, dans laquelle un rapport des moles de groupes HBD (donneurs de liaisons hydrogène) contre les moles de groupes HBA (accepteurs de liaisons hydrogène) (HMWHP) est ≥ 0,8 pour la composition.

**21.** Composition selon la revendication 1, dans laquelle un rapport du nombre de moles de groupes HBD présent contre le nombre de moles de groupes HBD préféré est ≥ 0,6 pour la composition.

**22.** Composition selon la revendication 1, dans laquelle un rapport HTS (donneurs de liaisons hydrogène: silicium) est

> 0,14 pour la composition.

**23.** Composition selon la revendication 1, dans laquelle le constituant hydrophile est un constituant contenant des groupes hydroxyle.

**24.** Composition selon la revendication 23, dans laquelle ledit constituant contenant des groupes hydroxyle comprend au moins une double liaison polymérisable et au moins un groupe fonctionnel hydrophile.

**25.** Composition selon la revendication 24, dans laquelle ladite double liaison polymérisable est sélectionnée dans le groupe constitué de doubles liaisons acryliques, méthacryliques, acrylamido, méthacrylamido, fumariques, maléiques, styryliques, isopropénylphényliques, O-vinylcarbonate, O-vinylcarbamate, allyliques, O-vinylacétyle et N-vinyllactame et N-vinylamido.

**26.** Composition selon la revendication 24, dans laquelle ledit monomère contenant des groupes hydroxyle est sélectionné dans le groupe constitué du méthacrylate de 2-hydroxyéthyle, de l'acrylate de 2-hydroxyéthyle, du 2-hydroxyéthylméthacrylamide, du 2-hydroxyéthylacrylamide, du vinylcarbamate de 2-hydroxyéthyle, du vinylcarbonate de 2-hydroxyéthyle, du méthacrylate de 2-hydroxypropyle, du méthacrylate d'hydroxyhexyle, du méthacrylate d'hydroxyoctyle, et de mélanges de ceux-ci.

**27.** Composition selon la revendication 24, dans laquelle ledit monomère contenant des groupes hydroxyle comprend le méthacrylate de 2-hydroxyéthyle.

**28.** Composition selon la revendication 24, dans laquelle ledit constituant contenant du silicone comprend un macromère de fluoroéther-siloxane-méthacrylate.

**29.** Composition selon la revendication 24 ou 28, dans laquelle ledit monomère contenant des groupes hydroxyle comprend du méthacrylate de 2-hydroxyéthyle et ledit polymère hydrophile à haute masse moléculaire comprend de la poly-N-vinylpyrrolidone.

**30.** Composition selon la revendication 24, dans laquelle ledit constituant contenant du silicone comprend du polydiméthylsiloxane à terminaisons mono-n-butyle à terminaisons monométhacryloxypropyle.

**31.** Composition selon la revendication 30, dans laquelle ledit monomère contenant des groupes hydroxyle comprend du méthacrylate de 2-hydroxyéthyle et ledit polymère hydrophile à haute masse moléculaire comprend de la poly-N-vinylpyrrolidone.

**32.** Composition selon la revendication 1, la composition étant capable de former un mélange transparent à la température ambiante et selon un rapport pondéral dudit diluant:dudit constituant hydrophile:dudit polymère hydrophile à haute masse moléculaire:dudit constituant contenant du silicone de 2:1,6:0,3:au moins 1.

**33.** Composition selon la revendication 29, dans laquelle ledit constituant hydrophile comprend du N,N-diméthylacrylamide, ledit constituant contenant du silicone comprend du polydiméthylsiloxane à terminaisons mono-n-butyle à terminaisons monométhacryloxypropyle, et ledit polymère hydrophile à haute masse moléculaire comprend de la poly-N-vinylpyrrolidone.

**34.** Dispositif ophtalmique comprenant un composé durci, le composé sous sa forme prédurcie comprenant une composition selon la revendication 1,
le dispositif ayant un angle de contact inférieur à 80 °.

**35.** Dispositif ophtalmique selon la revendication 34, dans lequel le constituant hydrophile est un constituant contenant des groupes hydroxyle.

**36.** Procédé de fabrication d'un dispositif ophtalmique transparent et mouillable, comprenant :

la combinaison d'au moins un constituant contenant du silicone, d'au moins un constituant hydrophile, d'au moins un polymère hydrophile à haute masse moléculaire, le polymère hydrophile à haute masse moléculaire ayant une valeur K supérieure à 46, et d'au moins un diluant ayant une valeur alpha de 0,05 à 1 et un paramètre de solubilité de Hansen, $\delta p$, inférieur à 10,

la mise en place de la combinaison dans un moule,
le durcissement de la combinaison,
le démoulage de la combinaison, et
l'élimination de la quasi-totalité du diluant de la combinaison, dans lequel le dispositif a un angle de contact inférieur à 80 °, dans lequel la combinaison ne comprend pas d'agent de compatibilisation contenant du silicone, lequel est un constituant de réaction qui contient au moins un groupe silicone et au moins un groupe hydroxyle, et dans lequel la valeur K, la valeur alpha et le paramètre de solubilité de Hansen sont mesurés par les méthodes décrites dans la description.

**37.** Procédé selon la revendication 36, dans lequel le constituant hydrophile est un constituant contenant des groupes hydroxyle.

**38.** Composition selon la revendication 1, comprenant :

un polydiméthylsiloxane à terminaisons mono-n-butyle à terminaisons monométhacryloxypropyle ;
du N,N-diméthylacrylamide ;
du méthacrylate de 2-hydroxyéthyle ;
du diméthacrylate de tétraéthylène glycol ;
de la poly(N-vinylpyrrolidone) (valeur K = 90) ;
de l'oxyde de bis(2,4,6-triméthylbenzoyl)-phénylphosphine ; et
du 3,7-diméthyl-3-octanol.

**39.** Composition selon la revendication 1, comprenant :

un polydiméthylsiloxane à terminaisons mono-n-butyle à terminaisons monométhacryloxypropyle ;
du N,N-diméthylacrylamide ;
du méthacrylate de 2-hydroxyéthyle ;
du diméthacrylate d'éthylène glycol ;
du 2-(2'-hydroxy-5-méthacrylyloxyéthylphényl)-2H-benzotriazole ;
de la poly(N-vinylpyrrolidone) (valeur K = 90) ;
de l'oxyde de bis(2,4,6-triméthylbenzoyl)-phénylphosphine ; et
de l'alcool t-amylique.

FIGURE 1

Hansen P vs. alpha values

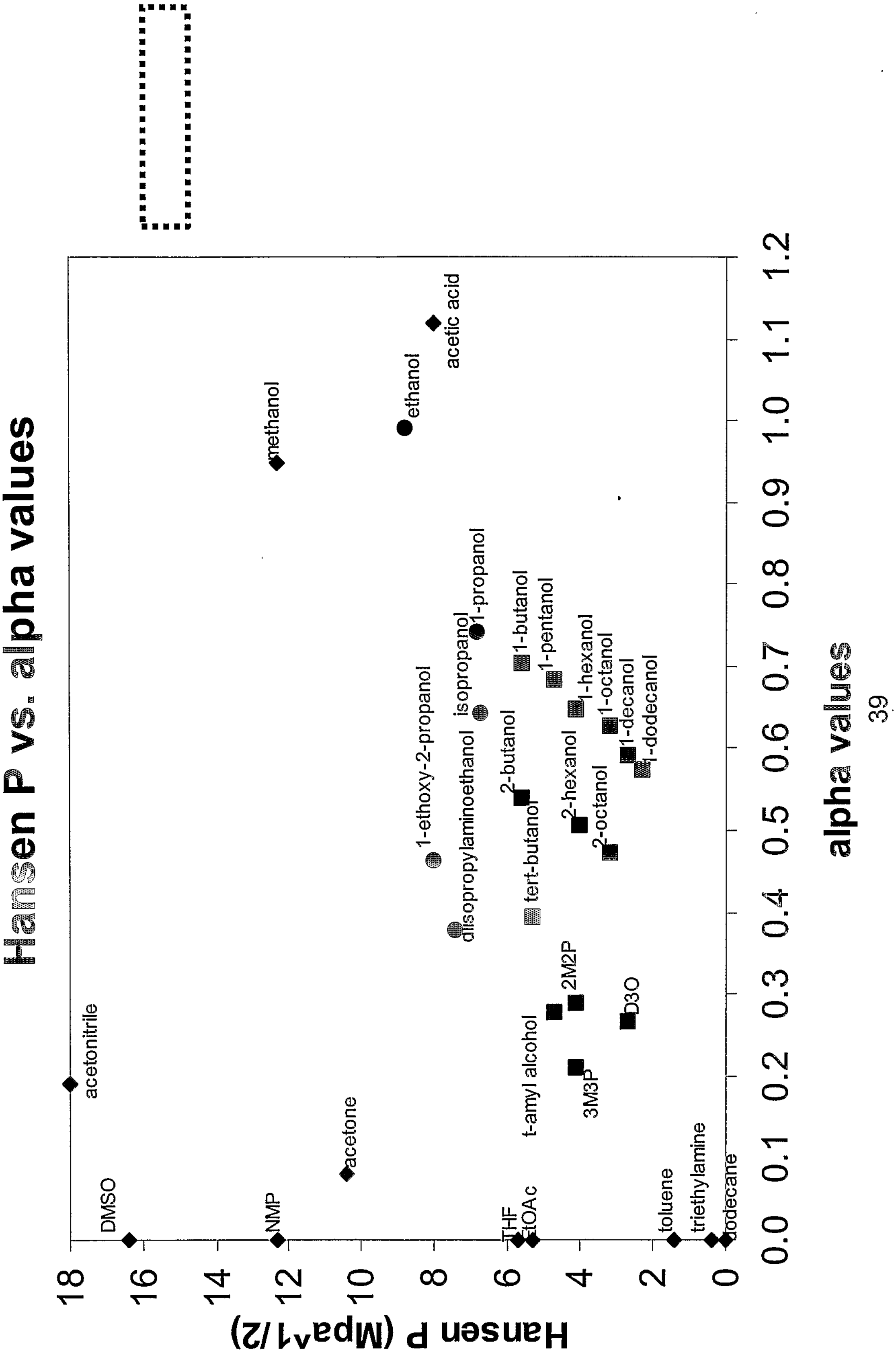

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 0170837 A
- US 6367929 B
- EP 0908744 A
- US 3959102 A
- US 2002107324 A
- US 10236538 B
- US 10236762 B
- US 3808178 A
- US 4120570 A
- US 4136250 A
- US 4153641 A
- US 4740533 A
- US 5034461 A
- US 5070215 A
- EP 080539 A
- WO 9631792 A
- US 5321108 A
- US 5387662 A
- US 5539016 A
- US 4190277 A
- US 5006622 A
- US 5256751 A
- US 5311223 A
- US 3408429 A
- US 3660545 A
- US 4113224 A
- US 4197266 A
- US 4495313 A
- US 4680336 A
- US 4889664 A
- US 5039459 A
- US 5760100 A


### Non-patent literature cited in the description


- Encyclopedia of Polymer Science and Engineering, N-Vinyl Amide Polymers. John Wiley & Sons Inc, vol. 17, 198-257
- Photoinitiators for Free Radical Cationic & Anionic Photopolymerization. John Wiley and Sons, 1998, vol. III
- **KAMLET, M. J. ; ABBOUD, J.M. ; ABRAHAM, M. H. ; TAFT, R. W.** *J. Org. Chem.,* 1983, vol. 48, 2877
- **BARTON.** CRC Handbook of Solubility Par. 1983, 85-87